(19) Europäisches Patentamt / European Patent Office / Office européen des brevets

(11) **EP 1 368 930 B1**

(12) **FASCICULE DE BREVET EUROPEEN**

(45) Date de publication et mention de la délivrance du brevet:
**16.11.2016 Bulletin 2016/46**

(21) Numéro de dépôt: **02714294.2**

(22) Date de dépôt: **12.03.2002**

(51) Int Cl.:
***H04L 9/32*** (2006.01)

(86) Numéro de dépôt international:
**PCT/FR2002/000884**

(87) Numéro de publication internationale:
**WO 2002/073876 (19.09.2002 Gazette 2002/38)**

(54) **AUTHENTIFICATION CRYPTOGRAPHIQUE PAR MODULES EPHEMERES**

KRYPTOGRAPHISCHE AUTHENTIFIZIERUNG MITTELS EPHEMERALER MODULE

CRYPTOGRAPHIC AUTHENTICATION WITH EPHEMERAL MODULES

(84) Etats contractants désignés:
**AT BE CH CY DE DK ES FI FR GB GR IE IT LI LU MC NL PT SE TR**

(30) Priorité: **12.03.2001 FR 0103313**

(43) Date de publication de la demande:
**10.12.2003 Bulletin 2003/50**

(73) Titulaire: **Callahan Cellular LLC Wilmington DE 19808 (US)**

(72) Inventeur: **GUILLOU, Louis F-35230 Bourgbarre (FR)**

(74) Mandataire: **Kazi, Ilya Mathys & Squire LLP The Shard 32 London Bridge Street London SE1 9SG (GB)**

(56) Documents cités:
**FR-A- 2 788 912     FR-A1- 2 788 911**

- **JARAMILLO C I ET AL: "AN IMPLEMENTATION OF A ZERO-KNOWLEDGE PROTOCOL FOR A SECURE NETWORKLOGIN PROCEDURE" ENERGY AND INFORMATION TECHNOLOGIES IN THE SOUTHEAST. COLUMBIA, APRIL 9 - 12, 1989, PROCEEDINGS OF THE SOUTHEAST CONFERENCE, NEW YORK, IEEE, US, vol. 1, 9 avril 1989 (1989-04-09), pages 197-201, XP000076800**

## Description

La présente invention concerne le domaine technique des procédés et des systèmes permettant à un premier équipement informatique, notamment un ordinateur personnel, d'être authentifié par au moins un second équipement informatique, notamment un serveur.

Jaramillo et al. (« An Implementation of a zero-knowledge protocol for a secure network login procédure », Energy and Information Technologies in the South East, Proceedings of the South East Conference, New York, IEEE, US, vol. 1, 9 Avril 1989, pages 197-201) divulgue une mise en oeuvre d'un protocole d'ouverture de session sans transfert de connaissance.

FR 2 788 912 divulgue une technique destinée à prouver l'authenticité d'une entité et/ou l'intégrité et/ou l'authenticité d'un message aux moyens de facteurs premiers particuliers.

EP 0 311 470 divulgue une technique d'authentification d'accréditations ou de messages à apport nul de connaissance et de signature de messages.

FR 2 788 911 divulgue une technique pour diminuer la charge de travail pendant une session destinée à prouver l'authenticité d'une entité et/ou l'origine et l'intégrité d'un message.

Des aspects de l'invention sont repris dans les revendications indépendantes et des caractéristiques optionnelles sont reprises dans les revendications dépendantes.

## Procédé

L'invention concerne un procédé permettant à un premier équipement informatique, notamment un ordinateur personnel, d'être authentifié par au moins un second équipement informatique, notamment un serveur. Lesdits équipements informatiques sont connectés à un réseau de communication.

Le procédé selon l'invention comprend deux phases : une phase d'ouverture d'une session sur ledit premier équipement informatique par un utilisateur déterminé, une phase durant la session proprement dite.

*I. lor s de la phase d'ouverture d'urte session sur ledit premier équipement informatique par un utilisateur déterminé*

Lors de la phase d'ouverture d'une session, le procédé selon l'invention comprend l'étape, pour un utilisateur déterminé, d'ouvrir une session sur ledit premier équipement informatique d'une durée limitée, notamment de quelques heures, en lançant l'exécution d'un logiciel d'ouverture de session et en introduisant des identifiants personnels, notamment un mot de passe et/ou une empreinte digitale. Lesdits identifiants personnels permettent de contrôler l'identité dudit utilisateur déterminé et d'accéder à une clé privée de signature dudit utilisateur déterminé.

Ledit logiciel d'ouverture de session produit des données d'identification de la session Id, notamment à partir des données d'identification de l'utilisateur déterminé et/ou des données d'identification dudit premier équipement informatique et/ou de la date et/ou de l'heure et/ou de ladite durée de la session.

Ledit logiciel d'ouverture de session produit également un module éphémère public n, un exposant public v et au moins une paire de nombres publics éphémères G, et de nombres privés éphémères Q liés par une équation générique du type :

$$G \equiv Q^v \pmod{n} \text{ ou } G \times Q^v \equiv 1 \pmod{n}$$

Ledit logiciel d'ouverture de session produit également un unique certificat éphémère en signant, au moyen de ladite clé privée de signature de l'utilisateur déterminé, lesdites données d'identification de la session Id et ledit module éphémère public n et, le cas échéant, ledit exposant public v ou lesdits nombres publics éphémères G ;

*II. durant la session*

Après la phase d'ouverture et pendant toute la durée de la session l'exécution du logiciel d'ouverture de session est inhibée.

Pendant la session considérée, au moins lors de la première connexion dudit premier équipement informatique à chacun desdits seconds équipements informatiques, le procédé selon l'invention comprend l'étape, pour ledit utilisateur déterminé, de lancer l'exécution d'un logiciel de preuve. Ledit logiciel de preuve diffuse, via le réseau de communication, vers le second équipement informatique, ledit certificat éphémère. Ledit logiciel de preuve produit des preuves entrant dans la mise en oeuvre d'un mécanisme d'authentification à apport de connaissance nul, notamment de type GQ.

Les mécanismes GQ d'authentification à apport de connaissance nul ont été décrits : dans le brevet EP 0 311 470 B1, dans la demande PCT WO 00/46946 publiée le 10 août 2000, dans la demande PCT WO 00/45550 publiée le 3 août 2000, dans la demande PCT WO 00/46947 publiée le 10 août 2000.

Dans le cas de la présente invention, ledit logiciel de preuve agit en temps que témoin au sens du protocole d'authentification GQ.

Pendant la session, le procédé selon l'invention comprend en outre l'étape, pour ledit second équipement informatique, de lancer l'exécution d'un logiciel de contrôle ouvrant ledit certificat éphémère avec une clé publique associée à ladite clé privée de signature, et d'extraire de celui-ci les données d'identification de la session Id et ledit module éphémère public n ainsi que, le cas échéant, ledit exposant public v ou lesdits nombres publics éphémères G.

Ledit logiciel de preuve agit en temps que contrôleur au sens du protocole d'authentification GQ.

De préférence, dans une variante de réalisation, le procédé selon l'invention est tel que ladite clé privée de signature dudit utilisateur déterminé est située dans un cryptogramme contenu dans ledit premier équipement informatique. Dans le cas de cette variante, le procédé selon l'invention comprend en outre l'étape, pour ledit logiciel d'ouverture de session, de déchiffrer ledit cryptogramme en mettant en oeuvre lesdits identifiants personnels dudit utilisateur déterminé.

De préférence, dans le cas d'une autre variante de réalisation, ladite clé privée de signature dudit utilisateur déterminé est située dans un cryptogramme contenu dans une carte à mémoire détenue par ledit utilisateur déterminé. Dans ce cas, le procédé selon l'invention comprend en outre l'étape, pour ledit utilisateur déterminé, d'insérer ladite carte à mémoire dans un lecteur de carte à mémoire associé audit premier équipement informatique. Dans ce cas, le procédé selon l'invention comprend en outre l'étape, pour ledit logiciel d'ouverture de session, de déchiffrer ledit cryptogramme en mettant en oeuvre lesdits identifiants personnels dudit utilisateur déterminé.

De préférence, dans le cas d'une autre variante de réalisation, ladite clé privée de signature dudit utilisateur déterminé est confinée avec des algorithmes de signature dans une carte à mémoire détenue par ledit utilisateur déterminé. Dans le cas de cette variante de réalisation, le procédé selon l'invention comprend en outre l'étape, pour ledit utilisateur déterminé, d'insérer ladite carte à mémoire dans un lecteur de carte à mémoire associé audit premier équipement informatique. Dans le cas de cette variante de réalisation, le procédé selon l'invention comprend en outre l'étape, pour ledit logiciel d'ouverture de session, de produire ledit certificat éphémère en exécutant lesdits algorithmes de signature mettant en oeuvre ladite clé privée de signature.

*Première variante de réalisation : cas d'un protocole d'authentification de type GQ0*

De préférence, selon une première variante de réalisation de l'invention, le procédé est mis en oeuvre dans le cas d'un protocole d'authentification de type GQ0. Dans ce cas, le procédé comprend en outre, pour produire ledit module éphémère public n, ledit exposant public v ainsi qu'au moins une paire de nombres publics éphémères G et de nombres privés éphémères Q, les étapes suivantes :

- l'étape de fixer la valeur dudit exposant public v,
- l'étape de choisir au hasard ledit module éphémère public n,
- l'étape de choisir au hasard m nombres privés éphémères $Q_1$ à $Q_m$,
- l'étape de calculer lesdits nombres publics éphémères G en appliquant l'une ou l'autre des équations génériques.

Le certificat éphémère lie le module éphémère public n, l'exposant public v, les nombres publics éphémères G aux données d'identification de la sessions Id.

De préférence également, dans le cas de cette première variante de réalisation, le protocole d'authentification de type GQ0 comporte un mécanisme de preuve mettant en oeuvre ledit module éphémère public n et lesdits m nombres privés éphémères $Q_1$ à $Q_m$.

*Deuxième variante de réalisation : cas d'un protocole d'authentification de type GQ1*

De préférence, selon une deuxième variante de réalisation de l'invention, le procédé est mis en oeuvre dans le cas d'un protocole d'authentification de type GQ1. Dans ce cas, le procédé comprend en outre, pour produire ledit module éphémère public n, ledit exposant public v ainsi qu'au moins une paire de nombres publics éphémères G et de nombres privés éphémères Q, les étapes suivantes :

- l'étape de fixer la valeur dudit exposant public v,
- l'étape de produire ledit module éphémère n en multipliant au moins deux facteurs premiers éphémères tel que v soit premier avec chaque facteur premier éphémère moins un,
- l'étape de produire les nombres publics éphémères G en appliquant à un message $m_i$ un mécanisme de format d'une norme de signature de type RSA, G= Red($m_i$),
- l'étape de déterminer un exposant privé s tel que s.v - 1 soit un multiple de chaque facteur premier éphémère moins un,
- l'étape de produire les nombres privés éphémères $Q_i$ ,notamment en élevant les nombres publics éphémères G à la puissance de l'exposant privé s modulo n, et/ou de produire $m \times f$ composantes privés éphémères $Q_{i,j}$ des m nombres privés éphémères $Q_i$.

Le certificat éphémère lie le module éphémère public n, l'exposant public v, aux données d'identification de la sessions Id. En effet, dans le cas de cette variante de réalisation, les messages $m_i$ n'ont pas besoin de protection particulière.

De préférence également dans le cas de cette deuxième variante de réalisation, le protocole d'authentification de type GQ1 comporte un mécanisme de preuve mettant en oeuvre :

- soit ledit module éphémère public n et lesdits m nombres privés éphémères $Q_1$ à $Q_m$,
- soit les f facteurs premiers éphémères $p_1$ à $p_f$ du module éphémère n= $p_1 \times ... \times p_f$, les $m \times f$ composantes privées éphémères $Q_{1,1}$ à $Q_{f,m}$ et les f-1 paramètres des restes chinois éphémères.

*Troisième variante de réalisation : cas d'un protocole d'authentification de type GQ2*

De préférence, selon une troisième variante de réalisation de l'invention, le procédé est mis en oeuvre dans le cas d'un protocole d'authentification de type GQ2. Dans ce cas, le procédé comprend en outre, pour produire ledit module éphémère public n, ledit exposant public v ainsi que m couples de nombres publics éphémères G et de nombres privés éphémères Q, m étant supérieur ou égal à 1, les étapes suivantes :

-   l'étape de fixer la valeur d'un paramètre k permettant de calculer ledit exposant public v du type $v=2^k$,
-   l'étape de produire un module éphémère public n produit de f facteurs premiers éphémères $n = p_1 \times p_2 \times ... \times p_f$, f étant supérieur ou égal à 2,
-   l'étape de choisir m nombres de base éphémères $g_i$, de préférences petits notamment inférieurs à 100, permettant de définir les m nombres publics éphémères $G_i$ du type $G_i = g_i^2$,
-   l'étape de produire les m nombres privés éphémères $Q_i$, notamment en élevant les nombres publics éphémères G à la puissance de l'exposant privé s modulo n, et/ou de produire m × f composantes nombres privés éphémères $Q_{i,j}$ des nombres privés éphémères $Q_i$ ;

Le certificat éphémère lie le module éphémère public n aux données d'identification de la sessions Id. En effet, le nombre k et les m nombres de base $g_i$ n'ont pas besoin de protection particulière.

De préférence également, dans le cas de cette troisième variante de réalisation, le protocole d'authentification de type GQ2 comporte un mécanisme de preuve mettant en oeuvre :

•   soit ledit module éphémère public n et lesdits m nombres privés éphémères $Q_1$ à $Q_m$,
•   soit les f facteurs premiers éphémères $p_1$ à $p_f$ du module éphémère $n= p_1 \times ... \times p_f$, les mx f composantes privées éphémères $Q_{1,1}$ à $Q_{f,m}$ et les f-1 paramètres des restes chinois éphémères.

La mise en oeuvre de nombres publics éphémères G et de nombres privés éphémères, de dimensions réduites, dans des protocoles d'authentification de type GQ utilisant la méthode des restes chinois associés à des protocoles d'ouverture de session de type RSA permet :

•   de diminuer les charges de travail, et corrélativement les temps d'attente des utilisateurs lors de chaque phase d'authentification de leur ordinateur personnel par les serveurs auxquels ils désirent accéder, dans un rapport de un à cent par rapport à ce qu'elles seraient si le procédé mettait en oeuvre des protocoles de type RSA,

•   sans que la mise en oeuvre de nombres publics éphémères G et de nombres privés, éphémères, de dimensions réduites, pendant des sessions courtes durée, ne réduise la sécurité du procédé d'authentification.

En effet,

•   d'une part, les protocoles GQ apportent, pour des capacités de calcul de contournement comparables, une sécurité supérieure aux protocoles RSA,
•   d'autre part, la clé privée de signature, de grandes dimensions, de type RSA, de longues durées, utilisées pour générer les certificats éphémères, n'est pas accessible pendant les sessions,
•   enfin, le caractère éphémère des nombres publics G et des nombres privés, de dimensions réduites, ne donne pas aux fraudeurs le temps nécessaire pour retrouver les données confidentielles des protocoles d'authentification GQ).

Le procédé selon l'invention peut être utilisé pour identifier un utilisateur utilisant un ordinateur personnel déterminé pendant une session et pour authentifier cet ordinateur personnel à partir de plusieurs serveurs. Il n'est pas nécessaire pour l'utilisateur de mémoriser plusieurs mots de passe. Il n'est pas non plus nécessaire pour les utilisateurs et pour les gestionnaires de serveurs de disposer de ressources de calcul importantes sur leurs ordinateurs personnels ou sur leurs serveurs.

**Système**

La présente invention concerne également un système permettant à un premier équipement informatique, notamment un ordinateur personnel, d'être authentifié par au moins un second équipement informatique, notamment un serveur. Lesdits équipements informatiques sont connectés à un réseau de communication. Le système selon l'invention comprend des éléments pour réaliser deux phases : une phase d'ouverture d'une session sur ledit premier équipement informatique par un utilisateur déterminé, une phase durant la session proprement dite.

*I. lors de la phase d'ouverture d'une session sur ledit premier équipement informatique par un utilisateur déterminé,*

Pour réaliser la phase d'ouverture d'une session, ledit premier équipement informatique comprend un logiciel d'ouverture de session, installé sur ledit premier équipement informatique. L'exécution du logiciel d'ouverture de session est lancée par l'utilisateur déterminé, lors de l'ouverture d'une session sur ledit premier équipement informatique d'une durée limitée, en actionnant un organe de commande, notamment un clavier dudit premier équipement informatique et en introduisant au moyen dudit organe de commande des identifiants personnels, notamment un mot de passe et/ou une empreinte digitale. Lesdits identifiants personnels permettent de contrôler l'identité dudit utilisateur déterminé et d'accéder à une clé privée de signature dudit utilisateur déterminé. Ledit premier équipement informatique comporte en outre des premiers moyens de calcul, contrôlés par ledit logiciel d'ouverture de session, pour produire des données d'identification de la session Id, notamment à partir des données d'identification de l'utilisateur déterminé et/ou des données d'identification dudit premier équipement informatique et/ou de la date et/ou de l'heure et/ou de ladite durée de la session. Les premiers moyens de calcul, contrôlés par ledit logiciel d'ouverture de session, produisent en outre un module éphémère public n, un exposant public v et au moins une paire de nombres publics éphémères G, et de nombres privés éphémères Q liés par une équation générique du type :

$$G \equiv Q^{\,v} \ (\mathrm{mod}\ n)\ \mathrm{ou}\ G \times Q^{\,v} \equiv 1\ (\mathrm{mod}\ n).$$

Les premiers moyens de calcul, contrôlés par ledit logiciel d'ouverture de session, produisent en outre un unique certificat éphémère en signant, au moyen de ladite clé privée de signature de l'utilisateur déterminé, lesdites données d'identification de la session Id et ledit module éphémère public n et, le cas échéant, ledit exposant public v ou lesdits nombres publics éphémères G.

*II. durant la session*

Ledit premier équipement informatique comporte en outre des moyens d'inhibition pour inhiber l'exécution du logiciel d'ouverture de session, après la phase d'ouverture, pendant toute la durée de la session.

Ledit premier équipement informatique comporte en outre un logiciel de preuve, installé sur ledit premier équipement informatique. L'exécution du logiciel de preuve est lancée par ledit utilisateur déterminé, pendant ladite session considérée, au moins lors de la première connexion dudit premier équipement informatique à chacun desdits seconds équipements informatiques, en actionnant un organe de commande, notamment un clavier dudit premier équipement informatique.

Ledit premier équipement informatique comporte en outre des premiers moyens de calcul, contrôlés par ledit logiciel de preuve, pour diffuser, via le réseau de communication, vers le second équipement informatique, ledit certificat éphémère et pour produire des preuves, entrant dans la mise en oeuvre d'un mécanisme d'authentification à apport de connaissance nul, notamment de type GQ. Ledit logiciel de preuve agit en temps que témoin du protocole GQ.

Ledit second équipement informatique comporte un logiciel de contrôle, installé sur ledit second équipement informatique, et des moyens de lancement pour lancer l'exécution dudit logiciel de contrôle. Ledit second équipement informatique comporte en outre des seconds moyens de calcul, contrôlés par ledit logiciel de contrôle, pour ouvrir ledit certificat éphémère avec une clé publique associée à ladite clé privée de signature, et pour extraire dudit certificat éphémère les données d'identification de la session Id et ledit module éphémère public n ainsi que, le cas échéant, ledit exposant public v ou lesdits nombres publics éphémères G. Ledit logiciel de preuve agit en temps que contrôleur du protocole GQ.

De préférence, dans une variante de réalisation, le système selon l'invention est tel que ladite clé privée de signature dudit utilisateur déterminé est située dans un cryptogramme contenu dans ledit premier équipement informatique. Dans le cas de cette variante de réalisation ledit premier équipement informatique comporte en outre des premiers moyens de calcul, contrôlés par ledit logiciel d'ouverture de session, pour déchiffrer ledit cryptogramme en mettant en oeuvre lesdits identifiants personnels dudit utilisateur déterminé.

De préférence, dans le cas d'une autre variante de réalisation, le système selon l'invention est tel que ladite clé privée de signature dudit utilisateur déterminé est située dans un cryptogramme contenu dans une carte à mémoire détenue par ledit utilisateur déterminé. Dans le cas de cette variante, ledit système comporte en outre un lecteur de carte à mémoire, associé audit premier équipement informatique, dans lequel ledit utilisateur déterminé insère ladite carte à mémoire. Ledit lecteur de carte à mémoire comporte des moyens de transfert de données entre ladite carte à mémoire et ledit premier équipement informatique. Dans ce cas, ledit premier équipement comporte en outre des premiers moyens de calcul, contrôlés par ledit logiciel d'ouverture de session, pour déchiffrer ledit cryptogramme en mettant en oeuvre lesdits identifiants personnels dudit utilisateur déterminé.

De préférence, dans le cas d'une autre variante de réalisation, le système selon l'invention est tel que ladite clé privée de signature dudit utilisateur déterminé est confinée avec des algorithmes de signature dans une carte à mémoire détenue par ledit utilisateur déterminé. Dans le cas de cette variante, ledit système comporte en outre un lecteur de carte à mémoire, associé audit premier équipement informatique, dans lequel ledit utilisateur déterminé insère ladite carte à mémoire. Ledit lecteur de carte à mémoire comporte des moyens de transfert de données entre ladite carte à mémoire et ledit premier équipement informatique. Ledit premier équipement comporte en outre des premiers moyens de calcul, contrôlés par ledit logiciel d'ouverture de session, pour produire ledit certificat éphémère en exécutant lesdits algorithmes de signature mettant en oeuvre ladite clé privée de signature.

*Première variante de réalisation : cas d'un protocole d'authentification de type GQ0*

De préférence, selon une première variante de réalisation de l'invention, le système est mis en oeuvre dans le cas d'un protocole d'authentification de type GQ0. Dans ce cas, pour produire un module éphémère public n, un exposant public v et au moins une paire de nombres publics éphémères G, et de nombres privés éphémères Q, lesdits premiers moyens de calcul, contrôlés par ledit logiciel d'ouverture de session, comprennent en outre des moyens pour :

- fixer la valeur dudit exposant public v,
- choisir au hasard ledit module éphémère public n,
- choisir au hasard lesdits nombres privés éphémères Q,
- calculer lesdits nombres publics éphémères G en appliquant l'une ou l'autre des équations génériques.

Le certificat éphémère lie le module éphémère public n, l'exposant public v, les nombres publics éphémères G aux données d'identification de la sessions Id.

De préférence également, dans le cas de cette variante de réalisation, le protocole d'authentification de type GQ0 comporte un mécanisme de preuve mettant en oeuvre ledit module éphémère public n et lesdits m nombres privés éphémères $Q_1$ à $Q_m$.

*Deuxième variante de réalisation : cas d'un protocole d'authentification de type GQ1*

De préférence, selon une deuxième variante de réalisation de l'invention, le système est mis en oeuvre dans le cas d'un protocole d'authentification de type GQ1. Dans ce cas, pour produire un module éphémère public n, un exposant public v et au moins une paire de nombres publics éphémères G, et de nombres privés éphémères Q, lesdits premiers moyens de calcul, contrôlés par ledit logiciel d'ouverture de session, comprennent en outre des moyens pour :

- fixer la valeur dudit exposant public v,
- produire ledit module éphémère n en multipliant au moins deux facteurs premiers éphémères tel que v soit premier avec chaque facteur premier éphémère moins un,
- produire les nombres publics éphémères G en appliquant à un message $m_i$ un mécanisme de format d'une norme de signature de type RSA, G= Red($m_i$),
- déterminer un exposant privé s tel que s.v - 1 soit un multiple de chaque facteur premier éphémère moins un,
- produire les nombres privés éphémères $Q_i$, notamment en élevant les nombres publics éphémères G à la puissance de l'exposant privé s modulo n, et/ou de produire m $\times$ f composantes privés éphémères

$Q_{i,j}$ des m nombres privés éphémères $Q_i$.

Le certificat éphémère lie le module éphémère public n, l'exposant public v, aux données d'identification de la sessions Id. En effet, les messages $m_i$ n'ont pas besoin de protection particulière.

De préférence également, dans le cas de cette deuxième variante de réalisation le protocole d'authentification de type GQ1 comporte un mécanisme de preuve mettant en oeuvre :

- soit ledit module éphémère public n et lesdits m nombres privés éphémères $Q_1$ à $Q_m$,
- soit les f facteurs premiers éphémères $p_1$ à $p_f$ du module éphémère n= $p_1 \times ... \times p_f$, les m$\times$ f composantes privées éphémères $Q_{1,1}$ à $Q_{f,m}$ et les f-1 paramètres des restes chinois éphémères.

*Troisième variante de réalisation : cas d'un protocole d'authentification de type GQ2*

De préférence, selon une troisième variante de réalisation de l'invention, le système est mis en oeuvre dans le cas d'un protocole d'authentification de type GQ2. Dans ce cas, pour produire un module éphémère public n, un exposant public v et au moins une paire de nombres publics éphémères G, et de nombres privés éphémères Q, lesdits premiers moyens de calcul, contrôlés par ledit logiciel d'ouverture de session, comprennent en outre des moyens pour :

- fixer la valeur d'un paramètre k permettant de calculer ledit exposant public v du type v=$2^k$,
- produire un module éphémère public n produit de f facteurs premiers éphémères n = $p_1 \times p_2 \times ... \times p_f$, f étant supérieur ou égal à 2,
- choisir m nombres de base éphémères $g_i$, de préférence petits notamment inférieurs à 100, permettant de définir les m nombres publics éphémères $G_i$ du type $G_i = g_i^2$,
- produire les m nombres privés éphémères $Q_i$, notamment en élevant les nombres publics éphémères G à la puissance de l'exposant privé s modulo n, et/ou de produire m $\times$ f composantes privées éphémères $Q_{i,j}$ des nombres privés éphémères $Q_i$.

Le certificat éphémère lie le module éphémère public n aux données d'identification de la sessions Id. En effet, le nombre k et les m nombres de base $g_i$ n'ont pas besoin de protection particulière.

De préférence également, dans le cas de cette troisième variante de réalisation, ledit protocole d'authentification de type GQ2 comporte un mécanisme de preuve mettant en oeuvre :

- soit ledit module éphémère public n et lesdits m nombres privés éphémères $Q_1$ à $Q_m$,
- soit les f facteurs premiers éphémères $p_1$ à $p_f$ du

module éphémère n= $p_1 \times ... \times p_f$, les $m \times f$ composantes privées éphémères $Q_{1,1}$ à $Q_{f,m}$ et les f-1 paramètres des restes chinois éphémères.

## Description

L'invention est complémentaire aux services existants et à leurs diverses évolutions. C'est une brique logicielle qui apporte une solution nouvelle aux problèmes de contrôle d'accès sur réseau privé virtuel. Comme le montrent les maquettes et les analyses, les charges de travail sont réduites de deux ordres de grandeur, avec un rapport supérieur à cent par rapport aux solutions connues aujourd'hui ; de plus, ces charges de travail s'équilibrent, c'est-à-dire que la charge requise pour prouver est voisine de la charge requise pour contrôler, ce qui permet de réaliser simplement l'authentification mutuelle entre utilisateurs.

Du point de vue de l'utilisateur, l'invention se résume en deux phases.

(1) A chaque entrée en session, l'ordinateur personnel doit (re)démarrer,

- Produire un module éphémère ainsi que des nombres nécessaires au déroulement ultérieur d'un protocole « zero-knowledge » de type GQ.
- Produire ou faire produire un certificat éphémère à l'aide de la clé privée de l'utilisateur, notamment une clé privée RSA, pour lier ce module éphémère à des données d'identification de la session.

(2) Durant la session, à chaque accès à des ressources via le réseau privé,

- Utiliser certificat éphémère et connaissance de la décomposition du module éphémère dans un protocole « zero-knowledge » de type GQ.

Tout d'abord, quelques précisions s'imposent sur ce qu'est

- la session,
- les problèmes posés par le contrôle d'accès sur réseau privé virtuel,
- la paire de clés de l'utilisateur et
- le problème de la factorisation d'un module arithmétique.

Ces précisions sont ensuite complétées par une taxinomie des schémas d'authentification comparant les techniques RSA et « zero-knowledge » GQ, avec une évaluation des charges de travail correspondantes.

Ces introductions permettent ensuite de détailler l'invention.

**[0057]** - **Session** - Une session est un contrôle exercé par un utilisateur pour une durée limitée sur un équipement informatique, notamment un ordinateur personnel, un organiseur personnel, un téléphone mobile ou un décodeur de télévision à péage. Une session est identifiée par diverses données :

- des données d'identification de l'équipement informatique et
- des données d'identification de l'utilisateur et
- une date et heure d'ouverture de la session et
- une durée maximum prévue pour la session.

Rien ne s'oppose à ce qu'un équipement informatique ait plusieurs utilisateurs ou même à ce qu'il soit en libre service ; cependant, à un moment donné, il est sous le contrôle exclusif d'un seul utilisateur : sur chaque équipement informatique, les sessions se suivent sans se recouvrir.

L'équipement informatique clôt la session pour l'une des raisons suivantes :

- Action explicite de l'utilisateur pour clore la session.
- Détection de l'absence d'activité de l'utilisateur.
- Dépassement de la durée maximum prévue pour la session.
- Action explicite d'un utilisateur pour ouvrir une session.

**[0060]** - **Problèmes dus au contrôle d'accès sur réseau privé virtuel** - Sur les réseaux d'entreprise, les contrôles d'accès se multiplient, ce qui pose un problème. Voici quelques exemples.

- Lorsqu'un serveur spécialisé recueille les demandes de congés des agents, il doit identifier chaque utilisateur, ce qui se fait en général par une procédure particulière avec un mot de passe individuel. Or les services de ce genre se multiplient avec des procédures développées au coup par coup, sans grand souci d'uniformisation. La multiplication de tels services est un véritable casse-tête pour l'utilisateur.
- Des utilisateurs nomades accèdent à un réseau d'entreprise par un serveur portail qui accueille des appels téléphoniques ; l'identification se fait selon une procédure particulière avec mot de passe individuel et dispositif matériel, par exemple une carte SecurId™ donnant une indication pseudo-aléatoire du temps, carte développée et commercialisée par la société RSA Security. Pour d'évidentes raisons de sécurité, l'usage de telles cartes ne peut pas être partagé entre plusieurs serveurs ou ressources. De plus, l'utilisation de ces cartes est plutôt stressant pour l'utilisateur au moment de l'appel téléphonique.
- Enfin, les équipements informatiques sont plus ou moins bien protégés par des procédures d'initialisation mettant également en oeuvre des mots de passe ; les meilleures parmi ces procédures sont souvent celles développées par les constructeurs eux-mêmes, par exemple, la procédure de mise en route d'ordinateurs personnels Toshiba par mot de passe. En cas de perte du mot de passe, pour récupérer un disque dur ainsi protégé, on doit faire appel au constructeur qui a d'autres possibilités d'accéder aux informations portées sur le disque dur.

Toutes les techniques d'accès évoluent et s'enrichissent.

-	Des infrastructures de clés publiques se mettent en place dans lesquelles chaque utilisateur du réseau privé se voit doté d'une paire de clés : une clé privée et une clé publique. Un annuaire d'entreprise gère les clés publiques, avec des droits attachés à chaque utilisateur.
-	Des cartes à puce apparaissent pour assurer la sécurité de mise en route des ordinateurs. Ces cartes sont susceptibles de porter différentes procédures et les mots de passe correspondants. Ces cartes sont également susceptibles de confiner la clé privée de l'utilisateur et les algorithmes d'utilisation de cette clé privée.
-	La « biométrie » se développe pour identifier les utilisateurs par des techniques complémentaires aux techniques à mot de passe.

Une série de remarques s'impose.

-	Une partie des services évoqués ci-dessus confondent

	o identification d'un utilisateur, c'est-à-dire une opération testant mot de passe et / ou caractéristiques de la biométrie d'un utilisateur, donc essentiellement non cryptographique, et
	o authentification cryptographique d'un équipement informatique, c'est-à-dire une opération telle qu'un cerveau humain ne puisse en enregistrer la clé ni en exécuter l'algorithme.

-	Les services évoqués ci-dessus sont particuliers ; on ne sait pas mettre les mots de passe en commun. Ils ne sont pas intégrables dans une infrastructure à clés publiques. Il y a un besoin pour un service commun d'authentification d'arrière plan, basé sur des clés publiques.
-	Les services évoqués ci-dessus sont orientés en ce sens que les rôles sont déterminés : l'ordinateur personnel établit une preuve que le serveur contrôle. Dans beaucoup de cas, il est bon que l'ordinateur personnel puisse s'assurer de l'authenticité du serveur ou de la ressource. Il y a un besoin pour un service pouvant aller jusqu'à l'authentification réciproque entre ordinateurs personnels figurant à l'annuaire ou à l'infrastructure de clés publiques, ce qui suggère d'équilibrer les charges de travail pour prouver et pour contrôler.
-	Toute clé privée résidant dans l'ordinateur personnel durant la session est en danger d'interception par un cheval de Troie ; les conséquences du viol d'une clé privée éphémère sont très limitées.
-	Enfin, même si l'utilisateur dispose d'une carte à puce confinant clé privée et algorithmes d'utilisation alors que sa clé publique figure dans une infrastructure de clés publiques, il n'est pas bon que pour des raisons d'authentification d'arrière-plan, la clé privée de l'utilisateur soit accessible par des logiciels s'exécutant librement dans l'ordinateur personnel. L'utilisateur doit contrôler exclusivement l'usage de sa clé privée. Même confinée dans une carte à puce, toute clé privée en libre usage par l'ordinateur personnel durant la session est en danger d'être détournée de son usage en dehors du contrôle de l'utilisateur.

Un constat s'impose : il manque un schéma à clé publique qui soit efficace et sûr. L'invention permet justement d'éviter la multiplication des mots de passe et des procédures : un unique mot de passe est attaché à l'utilisateur avec un usage exclusivement local. L'invention propose de compléter la paire de clés de l'utilisateur, par exemple une paire de clés RSA, par un module éphémère selon une technique « zero-knowledge » GQ, notamment ZK GQ2. L'invention complète les infrastructures à clés publiques et les mises en oeuvre de cartes à puce confinant clé privée et algorithme.

[0064]	- **Paire de clés de l'utilisateur** - Dans ce mémoire, chaque utilisateur dispose d'une paire de clés : une clé publique et une clé privée, par exemple une paire de clés RSA. La clé publique de l'utilisateur est

-	ou bien connue des ressources et serveurs auxquels l'utilisateur doit accéder, chacun de ces équipements informatiques possédant et gérant son propre annuaire ;
-	ou bien gérée par un annuaire spécialisé, intégrée à une infrastructure à clés publiques à la disposition des ressources et serveurs auxquels l'utilisateur doit accéder.

La clé privée de l'utilisateur sert à calculer des signatures numériques ; elle peut se trouver

-	ou bien dans un cryptogramme, lequel cryptogramme est présent dans l'ordinateur personnel ou bien dans une carte à puce bas de gamme qui le communique à l'ordinateur personnel ; l'ordinateur déchiffre le cryptogramme grâce au mot de passe de l'utilisateur ; ayant ainsi obtenu la clé privée de l'utilisateur, l'ordinateur personnel exécute ensuite l'algorithme de signature, puis, efface de sa mémoire la clé privée qu'il vient de déchiffrer et d'utiliser.
-	ou bien dans une carte à puce haut de gamme, confinée avec un algorithme de signature dont l'exécution est conditionnée à la présentation du mot de passe de l'utilisateur.

**[0066]** - **Problème de la factorisation et taille des modules** - Divers schémas d'authentification utilisent le problème de la factorisation qui peut s'énoncer ainsi : « - Un module public *n* est le produit d'au moins deux grands nombres premiers secrets, soit : $p_1 \leq ... p_f$ avec $f > 1$, dont au moins deux sont distincts, soit : $p_1 < p_f$, donc : $n = p_1 \times ... p_f$ »

La paire de clés de l'utilisateur doit vivre quelques années ; nous disons qu'elle est à long terme. Si la paire de clés de l'utilisateur est de type RSA, alors elle comprend un module public dont la factorisation doit rester secrète pour quelques années. Pour les modules à long terme, on peut se référer aux résultats suivants. Les nombres de 512 bits sont aujourd'hui à portée de factorisation en moins d'une année, mais avec des moyens conséquents. Des méthodes de factorisation trouvent des facteurs jusqu'à 160 bits. La taille du module doit être supérieure à 512 bits ; disons 768 bits pour quatre ans et 1024 ou 1536 bits pour huit ans. Il faut prendre des marges de sécurité. Aujourd'hui chaque module RSA à long terme est le produit de deux facteurs ; on pourrait pourtant facilement utiliser trois facteurs ou même plus, mais ce n'est pas l'usage aujourd'hui pour RSA. Une paire de clés éphémère doit vivre quelques heures, au maximum une journée de travail ; nous disons qu'elle est à court terme. L'invention considère une paire de clés éphémère basée sur un module public dont la factorisation doit rester secrète pour quelques heures. Pour les modules à court terme, une taille de 420 bits et trois facteurs premiers de 140 bits sont appropriés à l'heure actuelle ; on peut encore envisager 640 bits et quatre facteurs de 160 bits. L'évolution de la taille des modules à court terme est un paramètre qu'il faut ajuster en tenant compte de l'évolution des performances en factorisation ; c'est un paramètre qui peut changer du jour au lendemain et qu'il faut prendre en compte dès la conception du système.

En résumé, un module éphémère peut être deux à quatre fois plus court qu'un module à long terme.

Un module public est toujours utilisé avec un exposant public. Les caractéristiques de l'exposant public dépendent du schéma considéré.

- Les schémas RSA utilisent comme exposant public un nombre impair, généralement premier, notamment $v = 3$ et $v = 2^{16}+1$.
- Les schémas ZK GQ1 dépendent de la signature RSA, notamment avec $v = 2^{16}+1$. Il s'agit de prouver la connaissance d'une signature RSA sans la révéler.
- La signature de Rabin utilise l'exposant public deux, soit $v = 2$.
- Les schémas ZK GQ2 utilisent comme exposant public une puissance de deux plus grande que deux, soit $v = 2^k$ avec $k > 1$. Il s'agit de prouver la connaissance d'une décomposition du module sans la révéler.

**[0070]** - **Taxinomie des schémas d'authentification et évaluation des charges de travail** - Les techniques d'authentification mettent en jeu deux entités. Une entité produit une preuve associée à l'information. Une autre entité vérifie la preuve associée à l'information. En un mot, l'entité qui contrôle vérifie que l'entité qui prouve parle bien de la même information. Il s'agit de se prémunir contre des risques dus à un intrus menaçant l'intégrité. Il faut distinguer l'opération de l'entité légitime qui prouve et l'opération de l'intrus qui forge. Par une opération de forgeage, l'intrus cherche à leurrer le contrôleur sans connaître a priori tous les secrets de celui qui prouve. Il est clair que celui qui prouve au moins doit protéger sa clé privée et la maintenir secrète.

**Authentification statique** - Dans un schéma d'authentification sans interaction, celui qui prouve transmet des données d'identification à celui qui contrôle ; la preuve associée est une signature numérique de ces données. Celui qui contrôle applique une clé publique de vérification à la signature numérique. L'interface de communication voit passer les mêmes données et la même signature à chaque authentification. On dit alors que l'authentification est statique.

Si une authentification statique est utile localement pour renforcer une observation visuelle de la carte, elle n'est d'aucune utilité à distance à travers un réseau tel que l'Internet. En effet, la preuve peut être rejouée.

**Exemple d'authentification statique avec RSA -** Le schéma suivant est utilisé par les cartes bancaires françaises depuis 1984 ; il figure également dans les spécifications internationales publiées en 1996 par les opérateurs de cartes de crédit : Europay, Mastercard et Visa (marques déposées) et appelées EMV '96. Les séries de normes ISO/CEI 9796 et 14888 donnent des exemples de schémas de signature numérique, notamment RSA.

- L'émetteur de cartes dispose d'une paire de clés RSA.

  ○ La clé privée de signature est le secret de l'émetteur de cartes. Elle comporte un exposant privé de signature *s* et un module public *n*.
  ○ Chaque terminal de paiement connaît la clé publique de vérification. Elle comporte un exposant public de vérification *v* et un module public *n*.

- Lors de la personnalisation (on parle alors d'émission de cartes), chaque carte reçoit des données d'identification et une signature RSA de ces données. La norme de signature RSA en usage comporte un mécanisme de format Red() qui transforme les données d'identification, c'est-à-dire une chaîne d'octets représentée par *Id*, en un nombre de l'anneau des entiers modulo *n*, soit $J = \text{Red}(Id)$. La signature RSA de ces données est un nombre *S* de l'anneau des entiers modulo *n* ; ce nombre *S* s'obtient en appliquant la clé privée de signature au nombre $J$ ; soit : $S \equiv J^s \pmod{n}$.

- Lors de chaque opération de paiement, le terminal prend connaissance des données d'identification de la carte $Id$ et de leur signature $S$ qu'il vérifie à l'aide de la clé publique de vérification. L'authentification réussit ou échoue selon que le nombre Red($Id$) est identique ou pas au nombre $S^v \pmod{n}$.

⇒ La preuve est alors un point de la permutation RSA.

Le contrôleur applique la clé publique de vérification à la signature, c'est-à-dire, élève le nombre $S$ à la puissance $v$ modulo $n$. Pour faire l'opération, il écrit l'exposant $v$ en binaire et examine les bits successifs à partir du bit qui suit le poids fort jusqu'au bit de poids faible. A partir d'une variable égale à $S$, à chaque bit, il élève la variable au carré modulo $n$, puis, si le bit vaut un, il multiplie la variable par $S$ modulo $n$. Lorsque tous les bits ont été pris en compte, la valeur de la variable est le résultat cherché, soit : $S^v \pmod{n}$. La charge de travail du contrôleur dépend donc de l'exposant public de vérification $v$. Remarquons qu'un carré modulo représente environ 3/4 d'une multiplication modulo, soit : $XM_n \approx 0.75\ MM_n$.

- Pour $v = 3$, ce qui s'écrit 11 en binaire, le contrôleur exécute un carré modulo $n$ suivi d'une multiplication modulo $n$.
  Soit: $1\ XM_n + 1\ MM_n \approx 1.75\ MM_n$
- Pour $v = 2^{16}+1$, ce qui s'écrit 1 0000 0000 0000 0001 en binaire, le contrôleur exécute seize carrés modulo $n$ suivi d'une multiplication modulo $n$.
  Soit : $16\ XM_n + 1\ MM_n \approx 13\ MM_n$

**Authentification dynamique -** Dans un schéma d'authentification avec interaction, un dialogue s'instaure entre celui qui prouve et celui qui contrôle ; chacun est alternativement émetteur et récepteur de façon à obtenir une preuve en temps réel, c'est-à-dire qu'on ne puisse pas rejouer. Dans les deux cas suivants, le contrôleur émet un défi pris au hasard, donc imprédictible ; nous allons voir que les propriétés du défi sont pourtant bien différentes entre authentification à doublet et authentification à triplet.

**Authentification dynamique à doublet** - Avec deux transmissions, celui qui contrôle émet un défi produit au hasard ; puis, celui qui prouve émet une réponse : enfin, celui qui contrôle vérifie que la réponse convient bien au défi. Chaque défi doit être unique, ce qui est statistiquement assuré si les défis possibles sont assez nombreux.

Pour s'assurer qu'un message est connu de celui qui prouve, la réponse doit dépendre à la fois du défi et du message à authentifier ; celui qui contrôle doit alors vérifier que la réponse convient bien au défi et au message.

Une remarque s'impose.

- La preuve peut bien être une signature numérique. Cependant, si les contraintes nécessaires aux signatures numériques sont suffisantes pour un tel protocole, l'inverse n'est pas vrai. Un tel protocole est bien moins contraignant que la signature numérique, comme illustré plus loin par une authentification ZK à doublet.

**Exemple d'authentification dynamique avec RSA -** Chaque preuve comprend deux nombres formant un doublet RSA : un nombre Red(défi, message) et un nombre transmis en réponse. L'ensemble des preuves est alors un sous-ensemble de la permutation RSA.

Celui qui prouve calcule une signature RSA que le contrôleur doit vérifier.

- Sans utiliser la décomposition du module $n$, c'est-à-dire, sans utiliser les facteurs premiers, le témoin élève un nombre à la puissance $s$ modulo $n$, c'est-à-dire, exécute $\log_2 n$ carrés modulo $n$, séparés une fois sur deux en moyenne par une multiplication modulo $n$.
  Soit : $(\log_2 n)\ XM_n + 0.5\ (\log_2 n)\ MM_n = 5/4 \log_2 n\ MM_n$
- En utilisant les facteurs premiers et les restes chinois, le témoin exécute

  ◦ d'abord une décomposition d'un nombre, un élément de l'anneau des entiers modulo $n$, en $f$ composantes, un nombre dans chaque corps de Galois composant l'anneau.
  ◦ puis dans chaque corps, une composante de signature en $\log_2 p$ carrés modulo $p$, séparés une fois sur deux en moyenne par une multiplication modulo $p$,
  Soit : $f(\log_2 p)\ XM_p + f/2\ (\log_2 p)\ MM_p \approx 1.25 \log_2 n\ MM_p$
  En effet, les facteurs ont à peu près la même taille. Donc chaque $p$ est environ $f$ fois plus court que $n$, soit : $p^f \approx n$, donc $f \log_2 p \approx \log_2 n$.
  o et enfin, une opération des restes chinois pour établir une signature dans l'anneau des entiers modulo $n$ à partir des $f$ composantes, une dans chaque corps de Galois.

Multiplier la longueur du module par $f$ revient à multiplier la charge de la multiplication modulo par $f^2$, c'est-à-dire, $MM_p \approx MM_n / f^2$. Cette règle permet d'évaluer la charge comme suit.
Soit : Décomposition$_f$ + $(5/4 \log_2 n\ MM_n) / f^2 + CRT_f$

**Authentification dynamique à triplet** - Avec trois transmissions, on fait une authentification « zero-knowledge », c'est-à-dire, sans révéler autre chose que le fait de connaître le secret ; celui qui prouve commence par établir un aléa, puis, il calcule et émet un engagement ; puis, celui qui contrôle émet un défi produit au hasard ; puis, celui qui prouve émet une réponse, fonction de l'aléa, du secret et du défi ; enfin, celui qui contrôle rétablit un engagement à partir de la réponse et du défi ; l'authentification est réussie si les deux engagements sont identiques et non nuls.

Les dialogues étant indépendants les uns des autres, chaque défi peut se reproduire ; il doit seulement être imprévisible ; par conséquent, le nombre de défis possibles peut se réduire à deux.

Deux remarques s'imposent.

- Avec trois transmissions « zero-knowledge », on peut s'assurer qu'un message est connu de celui qui prouve ; au lieu de transmettre l'engagement, celui qui prouve calcule et transmet un code de hachage de l'engagement et du message à authentifier ; celui qui contrôle rétablit un engagement à partir de la réponse et du défi, puis, un code de hachage de l'engagement reconstruit et du message ; l'authentification est réussie si les deux codes de hachage sont identiques pour un engagement reconstruit non nul. Toutefois, le triplet est toujours au coeur du protocole.

- Celui qui contrôle prend l'initiative de lancer les contrôles, ce qu'il fait en pratique en émettant un « engagement de défi », ce qui assure que les deux tirages au hasard sont effectivement indépendants : celui du témoin qui prouve et celui du contrôleur qui vérifie. Toutefois, le triplet est toujours au coeur du protocole.

**Exemple d'authentification dynamique à triplet avec ZK GQ1** - Pour prouver la connaissance d'une signature RSA utilisant $v = 2^{16}+1$, le témoin calcule un triplet ZK GQ1.

- Sans utiliser la décomposition du module $n$, c'est-à-dire, sans utiliser les facteurs premiers, le témoin calcule

  ◦ d'abord, un engagement $r^v$ (mod $n$) en 16 carrés modulo $n$, puis, une multiplication modulo $n$,
  ◦ puis, une réponse $r \times Q^d$ (mod $n$) en 15 carrés modulo $n$, en moyenne 8 multiplications modulo $n$, puis, une multiplication modulo $n$.
  Soit en tout : 31 $XM_n$ + 10 $MM_n \approx$ 33,25 $MM_n$

- En utilisant les facteurs premiers et les restes chinois, le témoin calcule

  ◦ une composante d'engagement $r_j^v$ (mod $p_j$) par facteur, en 16 carrés modulo $p$ et une multiplication modulo $p$, puis, une opération des restes chinois pour établir un engagement modulo $n$,
  ◦ une composante de réponse $r_j \times Q_j^d$ (mod $p_j$) par facteur, en 15 carrés modulo $p$, en moyenne 8 multiplications modulo $p$ et une multiplication modulo $p$, puis, une opération des restes chinois pour établir une réponse modulo $n$.

  Soit en tout : (31 $XM_n$ + 10 $MM_n \approx$ 33,25 $MM_n$) / $f$ +

2 $CRT_f$

- Le contrôleur reconstruit un engagement $G^d \times D^v$ (mod $n$) en 16 carrés modulo $n$, en moyenne 8 multiplications modulo $n$, puis, une multiplication modulo $n$.
  Soit en tout : 16 $XM_n$ + 9 $MM_n \approx$ 21 $MM_n$

Chaque preuve comprend trois nombres : un engagement, un défi et une réponse. L'engagement et la réponse sont deux nombres $R$ et $D$ non nuls plus petits que $n$. Le défi est un nombre $d$ de zéro à $v$-1. Ils forment ensemble un triplet ZK GQ1. L'ensemble des triplets ZK GQ1 constitue une famille de $v$ permutations de l'anneau des entiers modulo $n$. Le défi nul correspond à la permutation RSA.

**Exemple d'authentification dynamique à triplet avec ZK GQ2 -** Pour prouver la connaissance d'une décomposition du module $n$, le témoin calcule un triplet ZK GQ2.

- Sans utiliser la décomposition du module $n$, c'est-à-dire, sans utiliser les facteurs premiers, le témoin calcule un engagement en $k$ carrés modulo $n$. Il calcule une réponse en $k$-2 carrés modulo $n$, en moyenne ($m$ fois $k$-1)/2 multiplications modulo $n$, puis, une multiplication modulo $n$.
  Soit : $k$ $XM_n$ + ($k$-2) $XM_n$ + $m(k$-2)/2 $MM_n$ + $MM_n \approx$ ($m$+3)($k$-1)/2 $MM_n$

- En utilisant les facteurs premiers et les restes chinois, le témoin calcule

  ◦ une composante d'engagement par facteur, en $k$ carrés modulo $p$, puis, une opération des restes chinois pour établir un engagement modulo $n$,
  ◦ une composante de réponse par facteur, en $k$-2 carrés modulo $p$ et en moyenne ($m$ fois $k$-1)/2 multiplications modulo $p$, puis, une multiplication modulo $p$, puis, une opération des restes chinois pour établir une réponse modulo $n$.

  Soit en tout : (($m$+3)($k$-1)/2 $MM_n$) / $f$ + 2 $CRT_f$

- Le contrôleur ouvre un certificat. Puis, il reconstruit un engagement en $k$ carrés modulo $n$. En effet, les multiplications ou divisions avec les nombres de base sont négligeables.
  Soit : Certificat + $k$ $XM_n \approx$ Certificat + *0,75 $k$ $MM_n$*

Chaque preuve comprend trois nombres : un engagement, un défi et une réponse. L'engagement et la réponse sont deux nombres $R$ et $D$ non nuls plus petits que $n$. Le défi $d$ est un nombre de $m$ fois $k$-1 bits. Ils forment un triplet ZK GQ2.

**Comparaison de RSA 1024 bits avec ZK GQ2 420 bits** - Un exemple réaliste de paire de clés RSA utilise un module de 1024 bits à deux facteurs. RSA n'est pas utilisé aujourd'hui avec plus de deux facteurs bien que rien ne s'y oppose. Les charges de travail sont les suivantes.

- Produire une signature RSA représente

    ∘ 1280 $MM_{1024}$ sans CRT,
    ∘ 324 $MM_{1024}$ avec CRT ($f$ = 2).

- Contrôler une signature RSA représente

    ∘ 1,75 $MM_{1024}$ avec $v$ = 3,
    ∘ 13 $MM_{1024}$ avec $v$ = $2^{16}$+1.

Un exemple réaliste de paire de clés ZK GQ2 utilise un module de 420 bits à trois facteurs premiers de 140 bits avec deux nombres de base et $k$ = 9.

- Produire un triplet ZK GQ2 représente

    ∘ 11,25 $MM_{420}$ avec CRT, c'est-à-dire 1,89 $MM_{1024}$.

- Contrôler un triplet ZK GQ2 représente

    ∘ 6,75 $MM_{420}$, c'est-à-dire 1,14 $MM_{1024}$.

- L'ouverture d'un certificat de 1024 bits représente

    ∘ 0,75$MM_{1024}$ pour un carré (signature de Rabin),
    ∘ 1,75 $MM_{1024}$ pour un cube (signature RSA).

Ces illustrations démontrent le gain de deux ordres de grandeur entre la charge de travail due à la mise en oeuvre de la clé privée RSA d'un utilisateur et la charge de travail due à la mise en oeuvre d'un module éphémère en ZK GQ2. Un tel écart de performance est une rupture technologique. Par rapport aux systèmes existants, les conséquences pour l'utilisateur sont une ergonomie satisfaisante pour une sécurité accrue. **Autres méthodes d'authentification zero-knowledge** - Qui peut le plus, peut le moins. Les techniques zero-knowledge permettent une authentification dynamique à doublet et même des signatures de messages. **Exemple d'authentification dynamique ZK GQ à doublet** - Celui qui contrôle émet un défi de quelques dizaines de bits, par exemple, 32 bits d'entropie.

Celui qui prouve calcule alors un ou plusieurs triplets ZK GQ dont les défis ZK proviennent du code de hachage du ou des engagements, du défi du contrôleur et du message à authentifier. L'entropie de l'ensemble des défis ZK est supérieure ou égale à l'entropie du défi du contrôleur. Par exemple, 48 bits de défi ZK pour 32 bits de défi de contrôleur. La preuve comprend le ou les triplets ZK GQ ou bien un sous-ensemble approprié de ces triplets,

- c'est-à-dire, les engagements et les réponses puisque les défis sont facilement reconstruits,

- ou mieux, les défis et les réponses puisque les engagements sont facilement reconstruits.

Un exemple réaliste de preuve ZK GQ1 est trois triplets avec $v$ = $2^{16}$+1 ou mieux, un seul triplet avec $2^{48}$-65. Un autre exemple réaliste avec ZK GQ2 utilise un module à trois facteurs avec deux nombres de base : la preuve comporte trois triplets pour $k$ = 9 et un seul pour $k$ = 25.

**Exemple de signature ZK GQ** - Celui qui prouve calcule alors un ou plusieurs triplets ZK GQ dont les défis ZK proviennent du code de hachage du ou des engagements et du message à authentifier. La taille des défis ZK doit être assez grande, par exemple, 64 bits ou 80 bits. La preuve comprend le ou les triplets ZK GQ ou bien un sous-ensemble approprié de ces triplets,

- c'est-à-dire, les engagements et les réponses puisque les défis sont facilement reconstruits,
- ou mieux, les défis et les réponses puisque les engagements sont facilement reconstruits.

Un exemple réaliste de preuve est huit triplets ZK GQ1 avec $v$ = $2^{16}$+1 ou mieux, un seul triplet ZK GQ1 avec $v$ = $2^{64}$-257. Un autre exemple réaliste avec ZK GQ2 utilise un module à trois facteurs avec deux nombres de base : la preuve comporte huit triplets pour $k$ = 9 et un seul pour $k$ = 65.

Voyons maintenant les détails de l'invention.

**A chaque ouverture de session,** l'équipement informatique exécute un logiciel d'initialisation ayant les caractéristiques suivantes (l'ordre des opérations n'est pas significatif).

- Produire des données d'identification de la session qui s'ouvre, données dénotées par *Id.*
- Produire un module public éphémère *n,* un exposant public *v* plus grand que deux et au moins une paire de nombres GQ, disons *m* paires avec $m \geq 1$. Chaque paire comprend un nombre public G et un nombre privé *Q* liés par une équation générique GQ.
Ou bien l'équation directe : $G \equiv Q^v \pmod{n}$
Ou bien l'équation inverse : $G \times Q^v \equiv 1 \pmod{n}$
- Identifier l'utilisateur par une unique procédure locale, par exemple, l'unique mot de passe de l'utilisateur, éventuellement complété par biométrie, par exemple, un contrôle d'empreinte digitale ou vocale, pour produire ou faire produire une signature sous le contrôle de la clé privée de l'utilisateur afin de lier pour la durée de la session le module éphémère et les données d'identification de la session. Une telle signature est un certificat éphémère.

Selon la méthode GQ utilisée: GQ0, GQ1 ou GQ2, des contraintes particulières s'appliquent à la production du module éphémère, de l'exposant et des nombres publics, ainsi qu'à la structure des certificats. **Une première méthode (GQ0)** consiste à fixer un exposant public $v$ et à prendre au hasard un module public $n$ et $m$ nombres privés $Q_i$. Dans ce cas, la clé privée éphémère doit se représenter par le module $n$ et les $m$ nombres privés $Q_1$ à $Q_m$ ; le certificat éphémère lie les données d'identification de la session aux nombres publics $n$, $v$, $G_1$, ... $G_m$.

**Une deuxième méthode (GQ1)** revient pour celui qui prouve à démontrer la connaissance d'une signature RSA sans la révéler et pour celui qui contrôle à vérifier une signature RSA sans en prendre connaissance. Il faut alors utiliser une norme de signature RSA avec un mécanisme de format transformant tout message à signer en un nombre ; un tel mécanisme utilise généralement une fonction de hachage. Toute clé de vérification RSA comporte un exposant public $v$ et un module public $n$ qui est le produit de deux grands facteurs premiers secrets distincts $p_1$ et $p_2$ tels que $v$ soit premier avec $p_1$-1 et $p_2$-1. Dans ce cas, chaque nombre public $G_i$ résulte de l'application du mécanisme de format de la norme de signature à un message ; soit : $G_i$ = Red($message_i$) ; outre la représentation par le module $n$ et les $m$ nombres privés $Q_1$ à $Q_m$, la clé privée éphémère peut encore se représenter avantageusement par les $f$ facteurs premiers $p_1$ à $p_f$, $m \times f$ composantes privées $Q_{1,1}$ à $Q_{f,m}$ et $f$-1 paramètres des restes chinois ; le certificat éphémère lie les données d'identification de la session aux deux nombres $n$ et $v$ ; en effet, $message_1$ à $message_m$ n'ont pas besoin de protection particulière.

**Une troisième méthode (GQ2)** revient pour celui qui prouve à démontrer la connaissance d'une décomposition du module sans la révéler et pour celui qui contrôle à vérifier une décomposition du module sans en prendre connaissance. Le module $n$ est le produit d'au moins deux grands facteurs premiers dont au moins deux sont distincts, disons $f \geq 2$, $p_1 \leq p_2 ... \leq p_f$ et $p_1 < p_f$ avec $n = p_1 \times p_2 ... \times p_f$ ; l'exposant public $v$ est une puissance de deux plus grande que deux, disons $v = 2^k$ $avec$ $k \geq$ 2 ; les $m \geq 1$ nombres publics sont de tout petits carrés : $G_i = g_i^2$. Les nombres $g_1$ à $g_m$ sont les nombres de base. Dans ce cas, outre la représentation par le module $n$ et les $m$ nombres privés $Q_1$ à $Q_m$, la clé privée éphémère peut encore se représenter avantageusement par les $f$ facteurs premiers $p_1$ à $p_f$, $m \times f$ composantes privées $Q_{1,1}$ à $Q_{f,m}$ et $f$-1 paramètres des restes chinois ; le certificat éphémère lie les données d'identification de la session au nombre $n$ ; en effet, les tout petits nombres $k$ et $g_1$ à $g_m$ n'ont pas besoin de protection particulière.

**[0101]** - **Durant la session,** l'équipement informatique dialogue avec des équipements donnant accès à des ressources (par exemple, des portails d'accès) ou avec des équipements constituant des ressources (par exemple, des imprimantes ou des serveurs d'archivage).

- L'équipement informatique exécute un logiciel de preuve ayant les caractéristiques suivantes.

  ◦ Il ne connaît pas la clé privée de l'utilisateur.
  ◦ Il distribue le certificat éphémère qui permet d'établir $Id$ et $n$ pour qui connaît la clé publique de l'utilisateur, laquelle clé figure à l'annuaire des clés publiques.
  ◦ Il pratique le rôle de témoin ZK GQ pour établir des triplets ZK GQ constituant des preuves.

- Chaque ressource exécute un logiciel de contrôle ayant les caractéristiques suivantes.

  ◦ Il connaît la clé publique de l'utilisateur ou bien il peut se la procurer de manière sûre. Il s'en sert pour «ouvrir» le certificat et établir ainsi les données d'identification de la session et le module éphémère, plus éventuellement un exposant et des nombres publics.
  ◦ Il pratique le rôle de contrôleur ZK GQ pour vérifier des preuves.

Remarquons que, moyennant un accès à un annuaire pour prendre connaissance de clés publiques, un équipement informatique disposant du logiciel de contrôle peut tout à fait authentifier une session ouverte par n'importe quel utilisateur figurant à l'annuaire.

## Description détaillée

D'autres caractéristiques et avantages de l'invention apparaîtront à la lecture de la description d'une variante de réalisation de l'invention donnée à titre d'exemple indicatif et non limitatif, et de la

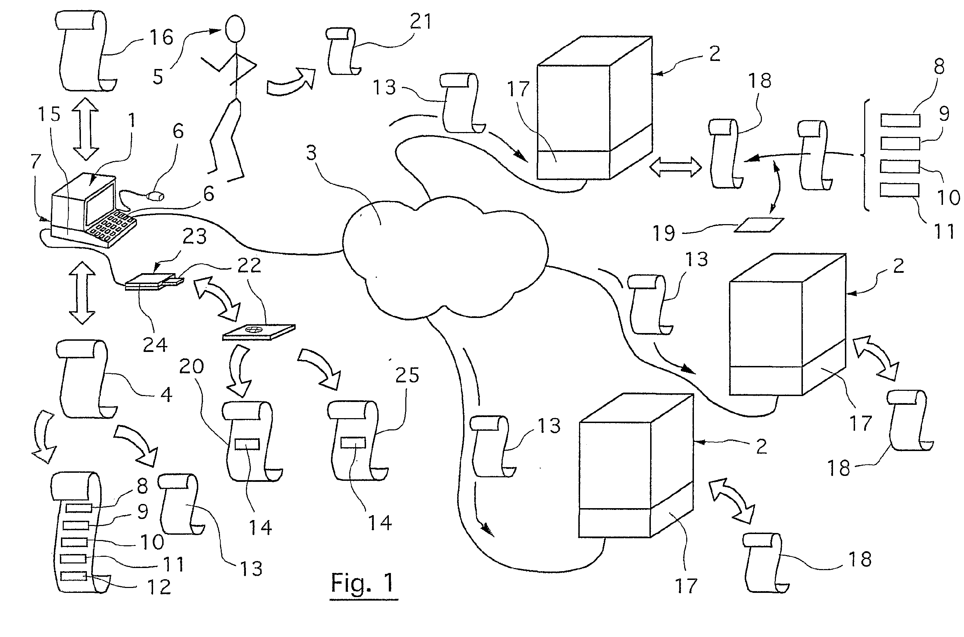

- figure 1 qui représente une vue schématique d'ensemble de la seconde variante de réalisation du système selon l'invention.

Le système selon l'invention permet à un ordinateur personnel 1 d'être authentifié par un ou plusieurs serveurs 2. De manière en soi connue, l'utilisateur 5 connecte son ordinateur personnel 1 aux serveurs 2 via un réseau de communication 3.

La phase d'ouverture.

On va maintenant décrire la phase d'ouverture d'une session sur l'ordinateur personnel 1 par un utilisateur 5 ayant un accès autorisé. La session est prévue pour une durée limitée, de l'ordre d'une journée. L'ordinateur personnel 1 comprend un logiciel d'ouverture de session 4. Ce logiciel d'ouverture de session 4 a été installé sur l'ordinateur personnel 1, préalablement à l'ouverture de la session, par l'utilisateur 5 ou par toute personne habilitée à le faire. L'utilisateur 5 lance l'exécution du logiciel d'ouverture de session 4 en actionnant une touche du clavier 6 ou en cliquant, au moyen d'une souris sur une icône correspondant au logiciel d'ouverture de session 4. L'utilisateur 5 introduit dans l'ordinateur personnel 1, au moyen du clavier 6, des identifiants personnels 21, notamment un mot de passe. L'utilisation d'un mot de passe peut être complétée par celle d'une empreinte digitale. De manière connue en soi, les identifiants personnels 21 permettent au logiciel d'ouverture de session 4 de contrôler l'identité de l'utilisateur déterminé 5 et d'accéder à la clé privée de signature 14 de l'utilisateur déterminé. Dans le cas de la variante de réalisation décrite ne se référant à la figure 1, clé privée de signature 14 de l'utilisateur 5 est située dans un cryptogramme 20 contenu dans une carte à mémoire 22 appartenant à l'utilisateur déterminé 5. Un lecteur 23 de carte à mémoire 22 est connecté à l'ordinateur personnel 1. Au début de la session, l'utilisateur 5 insère sa carte à mémoire 22 dans le lecteur 23. Le lecteur 23 comporte des moyens de transfert de données 24 entre ladite carte à mémoire 22 et les premiers moyens de calcul 7 de l'ordinateur personnel 1. Sous le contrôle du logiciel d'ouverture de session 4, les premiers moyens de calcul 7 déchiffrent ledit cryptogramme 20 en mettant en oeuvre, de manière connue en soi, les identifiants personnels 21 de l'utilisateur déterminé 5.

Dans une autre variante de réalisation, la clé privée de signature 14 de l'utilisateur 5 est située dans un cryptogramme 20 contenu dans une zone mémoire de l'ordinateur personnel 1. Dans le cas d'une telle variante de réalisation, les premiers moyens de calcul 7, contrôlés par le logiciel d'ouverture de session 4, déchiffrent ledit cryptogramme 20 en mettant en oeuvre les identifiants personnels 21 de l'utilisateur 5.

Dans une autre variante de réalisation, la clé privée de signature 14 de l'utilisateur 5 est confinée avec les algorithmes de signature 25 dans une carte à microprocesseur 22 détenue par l'utilisateur déterminé 5. Dans le cas d'une telle variante de réalisation, l'utilisateur insère sa carte à microprocesseur 22 dans un lecteur 23 de carte à microprocesseur 22, connecté à l'ordinateur personnel 1. Le lecteur 23 comporte des moyens de transfert de données 24 entre la carte à microprocesseur 22 et l'ordinateur personnel 1. Les premiers moyens de calcul 7 de l'ordinateur personnel 1, contrôlés par ledit logiciel d'ouverture de session 4, produisent, en mettant en oeuvre ladite clé privée de signature 14 et en exécutant les algorithmes de signature 25, le certificat éphémère 13 qui sera ci-après décrit.

On va maintenant poursuivre la description de la phase d'ouverture d'une session. Les premiers moyens de calcul 7 de l'ordinateur personnel 1, contrôlés par ledit logiciel d'ouverture de session 4, produisent les données d'identification de la session Id 8 à partir des données d'identification de l'utilisateur 5, des données d'identification de l'ordinateur personnel 1, de la date, de l'heure et de la durée de la session. Les premiers moyens de calcul 7 produisent également un module éphémère public n 9, un exposant public v 10 et au moins une paire de nombres publics éphémères G 11 et de nombres privés éphémères Q 12. Les paramètres n, v, G et Q liés par des équations génériques du type :

$$G \equiv Q^{v} \pmod{n}$$

ou du type

$$G \times Q^{v} \equiv 1 \pmod{n}.$$

Les premiers moyens de calcul 7 produisent également un unique certificat éphémère 13 en signant, au moyen de ladite clé privée de signature 14 de l'utilisateur 5, les données d'identification de la session Id 8 et ledit module éphémère public n 9. Le certificat peut également comporter, le cas échéant, la signature dudit exposant public v 10 ou celles des nombres publics éphémères G 11. If convient ici de préciser que par certificat unique on entend le fait qu'en pratique le logiciel d'ouverture de session 4 ne produira pas d'autres certificats pendant la durée d'une session identifiée par : les données d'identification de l'utilisateur 5, les données d'identification de l'ordinateur personnel 1, la date et l'heure de l'ouverture de la session ainsi que la durée maximum prévue pour la session. Il n'est pas exclu cependant qu'au cours d'une même session l'utilisateur puisse utiliser sa clé privée de signature pour procéder à des opérations de signature. A l'effet d'empêcher l'émission d'un autre certificat pendant la session considérée, l'ordinateur personnel 1 comporte des moyens d'inhibition 15 pour inhiber l'exécution du logiciel d'ouverture de session 4, après la phase d'ouverture, pendant toute la durée de la session.

Durant la session

On va maintenant décrire les opérations d'authentification pendant la durée d'une session. Au moins lors de la première connexion de l'ordinateur personnel 1 à l'un des serveurs 2, l'utilisateur 5 lance l'exécution d'un logiciel de preuve 16, installé sur l'ordinateur personnel 1. Ce logiciel de preuve 16 a été installé sur l'ordinateur personnel 1, préalablement à l'ouverture de la session, par l'utilisateur 5 ou par toute personne habilitée à le faire. L'utilisateur 5 lance l'exécution du logiciel de preuve 16 en actionnant une touche d'un clavier 6, ou en cliquant sur l'icône du logiciel de preuve 16 au moyen de la souris de son ordinateur personnel. Les premiers moyens de calcul 7, contrôlés par ledit logiciel de preuve 16, diffusent, via le réseau de communication 3, vers le serveur 2, ledit certificat éphémère 13. Les premiers moyens de calcul 7, contrôlés par ledit logiciel de preuve 16, produisent, de manière connue en soi selon la technologie GQ, des preuves. Ces preuves sont destinées à être utilisées dans la mise en oeuvre d'un mécanisme d'authentification, de type GQ, à apport de connaissance nul. Le logiciel de preuve 16 agit en temps que témoin du protocole GQ.

Un logiciel de contrôle 18 est installé sur le serveur 2. Celui-ci comporte des moyens de lancement actionnés, de manière connue en soi, lors de l'établissement d'une liaison informatique avec l'ordinateur personnel. Ces moyens de lancement lancent l'exécution dudit logiciel de contrôle 18. Sous le contrôle du logiciel de contrôle 18, les seconds moyens de calcul 17, ouvrent le certificat éphémère 13, avec une clé publique 19 associée à ladite clé privée de signature 14. Sous le contrôle du logiciel de contrôle 18, les seconds moyens de calcul 17 extraient du certificat éphémère 13 les données d'identification de la session Id 8 et ledit module éphémère public n 9 ainsi que, le cas échéant, ledit exposant public v 10 ou lesdits nombres publics éphémères G 11. Le logiciel de preuve 16 agit en temps que contrôleur du protocole GQ.

On va maintenant plus particulièrement décrire une première variante de réalisation du système dans le cas où le protocole d'authentification est du type GQ0. Dans le cas de cette variante de réalisation, les premiers moyens de calcul 7, sous le contrôle du logiciel d'ouverture de session 4, produisent un module éphémère public n 9, un exposant public v 10 et au moins une paire de nombres publics éphémères G 11, et de nombres privés éphémères Q 12 de la manière ci-après décrite. Les premiers moyens de calcul 7 comprenant en outre des moyens pour fixer la valeur dudit exposant public v 10, choisir au hasard ledit module éphémère public n 9, choisir au hasard lesdits nombres privés éphémères Q 12, calculer lesdits nombres publics éphémères G 11 en appliquant l'une ou l'autre des équations génériques. Dans le cas de cette variante de réalisation, le certificat éphémère 13 lie le module éphémère public n 9, l'exposant public v 10, les nombres publics éphémères G 11 aux données d'identification de la sessions Id. Dans le cas de cette variante de réalisation, le protocole d'authentification de type GQ0 comporte un mécanisme de preuve mettant en oeuvre ledit module éphémère public n 9 et lesdits m nombres privés éphémères Q $12_1$ à $Q_m$.

On va maintenant plus particulièrement décrire une deuxième variante de réalisation du système dans le cas où le protocole d'authentification est du type GQ1. Dans le cas de cette variante de réalisation, les premiers moyens de calcul 7, contrôlés par ledit logiciel d'ouverture de session 4, produisent un module éphémère public n 9, un exposant public v 10 et au moins une paire de nombres publics éphémères G 11 et de nombres privés éphémères Q 12, de la manière ci-après décrite. Les premiers moyens de calcul 7 comprennent des moyens pour fixer la valeur dudit exposant public v 10, produire ledit module éphémère n 9 en multipliant au moins deux facteurs premiers éphémères tel que v soit premier avec chaque facteur premier éphémère moins un, produire les nombres publics éphémères G 11 en appliquant à un message $m_i$ un mécanisme de format d'une norme de signature de type RSA, G= Red($m_i$), déterminer un exposant privé s tel que s.v - 1 soit un multiple de chaque facteur premier éphémère moins un, produire les nombres privés éphémères $Q_i$ 12, notamment en élevant les nombres publics éphémères G 11 à la puissance de l'exposant privé s modulo n, et/ou de produire m × f composantes privées éphémères $Q_{i,j}$ des m nombres privés éphémères $Q_i$ 12. Il apparaît donc que dans cette troisième variante de réalisation, on n'utilise pas nécessairement directement les nombres privés éphémères $Q_i$12 mais les composantes nombres privés éphémères $Q_{i,j}$ 12. Le certificat éphémère 13 lie le module éphémère public n 9 et l'exposant public v 10 aux données d'identification de la sessions Id. En effet, dans le cas de cette variante, les messages $m_i$ n'ont pas besoin de protection particulière. Dans le cas de cette variante de réalisation, le protocole d'authentification de type GQ1 comporte un mécanisme de preuve mettant en oeuvre soit ledit module éphémère public n 9 et lesdits m nombres privés éphémères $Q_1$ à $Q_m$ 12, soit les f facteurs premiers éphémères $p_1$ à $p_f$ 26 du module éphémère n= $p_1$ x ... × $p_f$, les m × f composantes privées éphémères $Q_{1,1}$ à $Q_{f,m}$ 27 et les f-1 paramètres des restes chinois éphémères 28.

On va maintenant plus particulièrement décrire une troisième variante de réalisation du système dans le cas où le protocole d'authentification est du type GQ2. Dans le cas de cette variante de réalisation, les premiers moyens de calcul 7, contrôlés par le logiciel d'ouverture de session 4, produisent un module éphémère public n 9, un exposant public v 10 et au moins une paire de nombres publics éphémères G 11, et de nombres privés éphémères Q 12 de la manière qui sera ci-après décrite. Les premiers moyens de calcul 7 comprennent des moyens pour fixer la valeur d'un paramètre k permettant de calculer ledit exposant public v 10 du type v=$2^k$, produire un module éphémère public n 9 produit de f facteurs premiers éphémères n = $p_1 \times p_2 \times ... \times p_f$, f étant supérieur ou égal à 2, choisir m nombres de base éphémères $g_i$, petits notamment inférieurs à 100, permettant de définir les m nombres publics éphémères $G_i$ 11 du type $G_i$ = g $^2$, produire les m nombres privés éphémères $Q_i$ 12, notamment en élevant les nombres publics éphémères G 11 à la puissance de l'exposant privé s modulo n, et/ou de produire m × f composantes privées éphémères $Q_{i,j}$ 12 des nombres privés éphémères Q $_i$ 12. Il apparaît donc que, dans cette troisième variante de réalisation, on n'utilise pas nécessairement directement les nombres publics éphémères $G_i$ 11 mais les nombres de base éphémères $g_i$. De même on n'utilise pas nécessairement directement les nombres privés éphémères $Q_i$12 mais les composantes privées éphémères $Q_{i,j}$ 12. Dans le cas de cette variante de réalisation, le certificat éphémère 13 lie le module éphémère public n 9 aux données d'identification de la session Id. En effet, le nombre k et les m nombres de base $g_i$ n'ont pas besoin de protection particulière. Dans le cas de cette variante de réalisation, le protocole d'authentification de type GQ2 comporte un mécanisme de preuve mettant en oeuvre soit ledit module éphémère public n 9 et lesdits m nombres privés éphémères $Q_1$ à $Q_m$ 12, soit les f facteurs premiers éphémères $p_1$ à $p_f$ 26 du module éphémère n= $p_j \times ... \times p_f$,

les m× f composantes privées éphémères $Q_i$ à $Q_{f,m}$ 27et les f-1 paramètres des restes chinois éphémères.

La mise en oeuvre de nombres publics éphémères G 11 et de nombres privés éphémères Q 12, de dimensions réduites, dans des protocoles d'authentification de type GQ utilisant la méthode des restes chinois associés à des protocoles d'ouverture de session de type RSA permet de solutionner le problème posé et d'atteindre les objectifs visés par la présente invention. En effet, la combinaison des traits techniques ci-dessus décrits permet de diminuer les charges de travail, et corrélativement les temps d'attente des utilisateurs lors de chaque phase d'authentification de leur ordinateur personnel par les serveurs auxquels ils désirent accéder. Il apparaît que la réduction des charges de travail est dans un rapport de un à cent par rapport à ce qu'elles seraient si le procédé mettait en oeuvre des protocoles connus, notamment de type RSA. Cette réduction des charges de travail obtenue par la mise en oeuvre de nombres publics éphémères G 11 et de nombres privés, éphémères, de dimensions réduites, pendant des sessions courtes durée, ne réduit pas la sécurité du procédé d'authentification, puisque :

- d'une part, les protocoles GQ apportent, pour des capacités de calcul de contournement comparables, une sécurité supérieure aux protocoles RSA,
- d'autre part, la clé privée de signature, de grandes dimensions, de type RSA, de longues durées, utilisées pour générer les certificats éphémères, n'est pas accessible pendant les sessions,
- enfin, le caractère éphémère des nombres publics G et des nombres privés, de dimensions réduites, ne donne pas aux fraudeurs le temps nécessaire pour retrouver les données confidentielles des protocoles d'authentification GQ.

Le procédé selon l'invention peut être utilisé pour identifier l'utilisateur utilisant l'ordinateur personnel concerné pendant une session et pour authentifier cet ordinateur personnel à partir de plusieurs serveurs,

- sans qu'il soit nécessaire pour l'utilisateur de mémoriser plusieurs mots de passe,
- sans qu'il soit nécessaire pour les utilisateurs et pour les gestionnaires de serveurs de disposer de ressources de calcul importantes sur leurs ordinateurs personnels ou sur leurs serveurs.

Le procédé selon l'invention est donc susceptible d'un grand nombre d'applications.

## Revendications

1. Procédé destiné à permettre l'authentification d'un premier dispositif informatique par au moins un second dispositif informatique au cours d'une session de communication de durée déterminée entre ledit premier dispositif informatique et ledit second dispositif informatique, lesdits dispositifs informatiques étant connectés à un réseau de communication, le procédé comprenant :

une étape consistant, pour un utilisateur (5), à ouvrir une session sur ledit premier dispositif informatique (1) en exécutant un logiciel (4) d'ouverture de session et en introduisant des identifiants personnels (21), lesdits identifiants personnels (21) permettant la vérification de l'identité dudit utilisateur (5) et l'accès à une clé privée de signature (14) dudit utilisateur (5) ;
une étape consistant, pour ledit logiciel (4) d'ouverture de session, à produire :

des données d'identification de session (Id), un ensemble de nombres privés éphémères Q1,Q2,...,Qm et de nombres publics éphémères G1,G2,...,Gm respectifs, où m est un entier supérieur ou égal à 1, chaque paire de nombres (Qi,Gi) vérifiant soit l'équation $Gi \cdot Qi^v \equiv 1 \bmod n$, soit l'équation $Gi \equiv Qi^v \bmod n$, où i est un entier compris entre 1 et m et v est un exposant public plus grand que deux, et où n est un module éphémère public égal au produit de f facteurs premiers privés désignés par p1,...,pf, au moins deux de ces facteurs premiers étant distincts, f étant un entier supérieur à 1, ledit module éphémère public n étant de dimension réduite par rapport à la dimension de la clé privée de signature (14) et tel que ledit module éphémère public n a une factorisation qui doit rester secrète pour une durée d'utilisation du module éphémère public n comparable à la durée de ladite session, et
un unique certificat éphémère (13), en signant, au moyen de ladite clé privée de signature (14), au moins lesdites données d'identification de session (Id) et ledit module éphémère public n ;

l'inhibition de l'exécution du logiciel (4) d'ouverture de session après la phase d'ouverture de session pendant toute la durée de la session ;
le procédé comprenant en outre, au moins au cours de la première connexion du premier dispositif informatique (1) au second dispositif informatique (2) pendant ladite session :
une étape consistant, pour ledit utilisateur (5), à lancer l'exécution d'un logiciel de preuve (16) agissant comme témoin dans un protocole d'authentification sans transfert de connaissance ;

l'envoi dudit certificat éphémère (13) au second dispositif informatique (2) ;

une étape consistant, pour le second dispositif informatique (2), à lancer l'exécution d'un logiciel de contrôle (18) agissant comme contrôleur dans ledit protocole d'authentification sans transfert de connaissance ; et

une étape consistant, pour ledit logiciel de contrôle (18) à ouvrir ledit certificat éphémère (13) à l'aide d'une clé publique associée à ladite clé privée de signature (14) et à extraire dudit certificat éphémère (13) lesdites données d'identification de session (Id) et le module éphémère public n.

2. Procédé selon la revendication 1, **caractérisé en ce que** l'étape d'extraction comprend en outre:

l'extraction dudit certificat éphémère (13) dudit exposant public v et/ou desdits nombres publics éphémères G1, G2, ... , Gm.

3. Procédé selon la revendication 1 ou la revendication 2, **caractérisé en ce que** ledit premier dispositif informatique (1) contient un cryptogramme (20) de ladite clé privée de signature (14), le procédé comprenant en outre une étape consistant, pour ledit logiciel (4) d'ouverture de session, à déchiffrer ledit cryptogramme (20) en mettant en oeuvre lesdits identifiants personnels (21).

4. Procédé selon la revendication 1 ou la revendication 2, **caractérisé en ce qu'**un cryptogramme (20) de ladite clé privée de signature (14) est contenu dans une carte à mémoire (22) détenue par ledit utilisateur (5), le procédé comprenant en outre:

une étape consistant, pour ledit utilisateur (5), à insérer ladite carte à mémoire (22) dans un lecteur (23) de cartes à mémoire associé audit premier dispositif informatique (1) ; et

une étape consistant, pour ledit logiciel (4) d'ouverture de session, à déchiffrer ledit cryptogramme (20) en mettant en oeuvre lesdits identifiants personnels (21).

5. Procédé selon la revendication 1 ou la revendication 2, **caractérisé en ce que** ladite clé privée de signature (14) ainsi que des algorithmes de signature (25) sont confinés dans une carte (22) à mémoire détenue par ledit utilisateur (5), le procédé comprenant en outre :

une étape consistant, pour ledit utilisateur (5), à insérer ladite carte (22) à mémoire dans un lecteur (23) de cartes à mémoire associé audit premier dispositif informatique (1) ; et

une étape consistant, pour ledit logiciel (4) d'ouverture de session, à produire ledit certificat éphémère (13) en exécutant lesdits algorithmes de signature (25) à l'aide de ladite clé privée de signature (14).

6. Procédé selon l'une quelconque des revendications 1 à 5, **caractérisé en ce que** ledit protocole d'authentification sans transfert de connaissance est du type GQ0, ledit procédé comprenant en outre, pour produire ledit module éphémère public n, ledit exposant public v ainsi qu'au moins une paire (Qi,Gi), où i=1,...,m, comprenant un nombre privé Qi et le nombre public Gi correspondant, les étapes suivantes :

- la fixation de la valeur dudit exposant public v,
- le choix au hasard dudit module éphémère public n,
- le choix au hasard dudit au moins un nombre privé éphémère Qi, et
- l'obtention dudit au moins un nombre public Gi d'après
l'équation $Gi \cdot Qi^v \equiv 1$ mod n ou
l'équation $Gi \equiv Qi^v$ mod n,

ledit certificat éphémère (13) liant le module éphémère public n, l'exposant public v et le nombre public Gi auxdites données d'identification de session (Id).

7. Procédé selon l'une quelconque des revendications 1 à 5, **caractérisé en ce que** ledit protocole d'authentification sans transfert de connaissance est du type GQ1, ledit procédé comprenant en outre, pour produire ledit module éphémère public n, ledit exposant public v ainsi qu'au moins une paire (Qi,Gi), où i=1,...,m, comprenant un nombre privé Qi et le nombre public Gi correspondant, les étapes suivantes :

- la fixation de la valeur dudit exposant public v,
- l'obtention dudit module éphémère public n en multipliant lesdits f facteurs premiers privés p1, ..., pf, ledit exposant public v étant premier avec tous les nombres (pj-1 ), où j=1,...,f,
- l'obtention dudit au moins un nombre public Gi en appliquant un format de signature standard RSA à un message correspondant mi,
- la détermination d'un exposant privé s tel que (sv-1) soit un multiple de tous les nombres (pj-1) pour j=1,...,f, et
- l'obtention dudit au moins un nombre privé éphémère Qi conformément à l'équation $Qi \equiv Gi^s$ mod n,

ledit certificat éphémère (13) liant le module éphémère public n et l'exposant public v auxdites données d'identification de session (Id).

**8.** Procédé selon l'une quelconque des revendications 1 à 5, **caractérisé en ce que** ledit protocole d'authentification sans transfert de connaissance est du type GQ2, ledit procédé comprenant en outre, pour produire ledit module éphémère public n, ledit exposant public v ainsi que lesdits nombres privés éphémères Q1,Q2,...,Qm et nombres publics éphémères G1,G2,...,Gm, les étapes suivantes :

- la fixation d'un paramètre de sécurité k, où k est un nombre entier supérieur à 1, et l'obtention de la valeur dudit exposant public v conformément à l'équation $v = 2^k$,
- l'obtention dudit module éphémère public n en multipliant lesdits f facteurs premiers privés p1,...,pf,
- le choix de m nombres de base gi (pour i=1,...,m), où chaque nombre de base gi est un nombre entier supérieur à 1, et l'obtention des nombres publics éphémères Gi conformément à l'équation $Gi \equiv gi^2 \bmod n$,
- la détermination d'un exposant privé s tel que (sv-1) soit un multiple de tous les nombres (pj-1) pour j=1,...,f, et
- l'obtention desdits nombres privés éphémères Qi conformément à l'équation $Qi \equiv Gi^s \bmod n$,

ledit certificat éphémère (13) liant le module éphémère public n auxdites données d'identification de session (Id).

**9.** Système comprenant un premier dispositif informatique (1) et au moins un second dispositif informatique (2), lesdits dispositifs informatiques étant connectés à un réseau de communication (3), ledit système permettant l'authentification dudit premier dispositif informatique (1) par ledit second dispositif informatique (2) au cours d'une session de communication de durée déterminée entre ledit premier dispositif informatique et ledit second dispositif informatique,
le premier dispositif informatique (1) comprenant :

un logiciel (4) d'ouverture de session destiné à être exécuté, par un utilisateur (5) lors de l'ouverture d'une session sur ledit premier dispositif informatique (1), en actionnant un organe de commande (6) et en introduisant, au moyen dudit organe de commande (6), des identifiants personnels (21), lesdits identifiants personnels (21) permettant de contrôler l'identité dudit utilisateur (5) et d'accéder à une clé privée de signature (14) dudit utilisateur (5);
des premiers moyens de calcul (7), contrôlés par ledit logiciel (4) d'ouverture de session, et ayant des moyens pour produire :

des données d'identification de session (Id),

un ensemble de nombres privés éphémères Q1,Q2,...,Qm et de nombres publics éphémères G1,G2,...,Gm respectifs,
où m est un entier supérieur ou égal à 1,
chaque paire de nombres (Qi,Gi) vérifiant
soit l'équation $Gi \cdot Qi^v \equiv 1 \bmod n$,
soit l'équation $Gi \equiv Qi^v \bmod n$,
où i est un entier compris entre 1 et m et v est un exposant public plus grand que deux, et où
n est un module éphémère public égal au produit de f facteurs premiers privés désignés par p1,...,pf, au moins deux de ces facteurs premiers étant distincts,
f étant un entier supérieur à 1,
ledit module éphémère public n étant de dimension réduite par rapport à la dimension de la clé privée de signature (14) et tel que ledit module éphémère public n a une factorisation qui doit rester secrète pour une durée d'utilisation du module éphémère public n comparable à la durée de ladite session, et
un unique certificat éphémère (13), en signant, au moyen de ladite clé privée de signature (14), au moins lesdites données d'identification de session (Id) et ledit module éphémère public n ;

des moyens d'inhibition (15) aptes à inhiber l'exécution du logiciel (4) d'ouverture de session après la phase d'ouverture de session pendant toute la durée de la session ;
un logiciel de preuve (16) comportant des instructions pour contrôler lesdits premiers moyens de calcul (7), et pour agir, lorsque son exécution est lancée par l'utilisateur (5) au moins au cours de la première connexion du premier dispositif informatique (1) au second dispositif informatique pendant ladite session, en actionnant ledit organe de commande (6), comme témoin dans un protocole d'authentification sans transfert de connaissance ; et
des moyens pour envoyer ledit certificat éphémère (13) au second dispositif informatique (2) via ledit réseau de communication (3) et

le second dispositif informatique (2) comprenant :

un logiciel (18) de contrôle comportant des instructions pour contrôler des seconds moyens de calcul (17), pour ouvrir ledit certificat éphémère (13) à l'aide d'une clé publique (19) associée à ladite clé privée de signature (14), et pour extraire dudit certificat éphémère (13) lesdites données d'identification de session (Id) et le module éphémère public n, de manière à agir comme contrôleur dans ledit protocole d'authentification sans transfert de connaissance ; et des moyens de lancement pour lancer l'exécution dudit logiciel (18) de contrôle.

**10.** Système selon la revendication 9, **caractérisé en ce que** ledit premier dispositif informatique (1) contient un cryptogramme (20) de ladite clé privée de signature (14), et **en ce que** lesdits premiers moyens de calcul (7) sont aptes à déchiffrer ledit cryptogramme (20) en mettant en oeuvre lesdits identifiants personnels (21).

**11.** Système selon la revendication 9, **caractérisé en ce qu'**il comprend en outre un lecteur (23) de cartes à mémoire associé audit premier dispositif informatique (1) et dans lequel ledit utilisateur (5) peut insérer une carte à mémoire (22) contenant un cryptogramme (20) de ladite clé privée de signature (14), ledit lecteur (23) de cartes à mémoire comportant des moyens de transfert de données (24) entre ladite carte à mémoire (22) et le premier dispositif informatique (1), et **en ce que** lesdits premiers moyens de calcul (7) sont aptes à déchiffrer ledit cryptogramme (20) en mettant en oeuvre lesdits identifiants personnels (21).

**12.** Système selon la revendication 9, **caractérisé en ce qu'**il comprend en outre un lecteur (23) de cartes à mémoire associé audit premier dispositif informatique (1) et dans lequel ledit utilisateur (5) peut insérer une carte à mémoire (22) contenant ladite clé privée de signature (14) ainsi que des algorithmes de signature (25), ledit lecteur (23) de cartes à mémoire comportant des moyens de transfert de données (24) entre ladite carte à mémoire (22) et le premier dispositif informatique (1), et **en ce que** lesdits premiers moyens de calcul (7) sont aptes à produire ledit certificat éphémère (13) en exécutant lesdits algorithmes de signature (25) à l'aide de ladite clé privée de signature (14).

**Patentansprüche**

**1.** Verfahren zum Zulassen der Authentifizierung eines ersten Computergeräts durch wenigstens ein zweites Computergerät im Laufe einer Kommunikationssitzung von bestimmter Dauer zwischen dem ersten Computergerät und dem zweiten Computergerät, wobei die genannten Computergeräte mit einem Kommunikationsnetz verbunden sind, wobei das Verfahren Folgendes beinhaltet:

einen Schritt, der für einen Benutzer (5) darin besteht, eine Sitzung auf dem genannten ersten Computergerät (1) durch Abarbeiten einer Sitzungsöffnungssoftware (4) und durch Eingeben von Personenkennungen (21) zu öffnen, wobei die genannten Personenkennungen (21) die Verifizierung der Identität des genannten Benutzers (5) und den Zugriff auf einen privaten Signaturschlüssel (14) des genannten Benutzers (5) zulassen;
einen Schritt, der für die genannte Sitzungsöffnungssoftware (4) darin besteht, Folgendes zu produzieren:

Sitzungsidentifikationsdaten (Id),
einen Satz von flüchtigen privaten Zahlen Q1,Q2,...,Qm und jeweiligen flüchtigen öffentlichen Zahlen G1,G2, ...,Gm,
wobei m eine ganze Zahl gleich oder größer als 1 ist,
wobei jedes Zahlenpaar (Qi,Gi) Folgendes verifiziert:

entweder die Gleichung $Gi \cdot Qi^v \equiv 1$ mod n,
oder die Gleichung $Gi \equiv Qi^v$ mod n, wobei i eine ganze Zahl zwischen 1 und m ist

und
v ein öffentlicher Exponent größer als zwei ist, und wobei
n ein flüchtiges öffentliches Modul gleich dem Produkt von f ersten privaten Faktoren mit der Bezeichnung p1, ...,pf ist, wobei wenigstens zwei dieser ersten Faktoren unterschiedlich sind,
wobei f eine ganze Zahl größer als 1 ist, wobei das flüchtige öffentliche Modul n eine reduzierte Größe mit Bezug auf die Größe des privaten Signaturschlüssels (14) hat, und so dass das genannte flüchtige öffentliche Modul n eine Faktorisierung hat, die für eine Nutzungsdauer des flüchtigen öffentlichen Moduls n im Vergleich zur Dauer der genannten Sitzung geheim bleiben muss, und
ein eindeutiges flüchtiges Zertifikat (13) durch Signieren, mittels des genannten privaten Signaturschlüssels (14), wenigstens der genannten Sitzungsidentifikationsdaten (Id) und des genannten flüchtigen öffentlichen Moduls n;
Verhindern der Abarbeitung der Sitzungsöffnungssoftware (4) nach der Sitzungsöffnungsphase während der gesamten Dauer der Sitzung;
wobei das Verfahren ferner wenigstens im Laufe der ersten Verbindung des ersten Computergeräts (1) mit dem zweiten Computergerät (2) während der genannten Sitzung Folgendes beinhaltet:

einen Schritt, der für den genannten Benutzer (5) darin besteht, die Abarbeitung einer Nachweissoftware (16) zu starten, die als Zeuge in einem Authentifikationsprotokoll ohne Wissenstransfer dient;

Senden des genannten flüchtigen Zertifikats (13) zu dem zweiten Computergerät (2);

einen Schritt, der für das zweite Computergerät (2) darin besteht, die Abarbeitung einer Kontroll-Software (18) zu starten, die als Kontrolleur in dem genannten Authentifizierungsprotokoll ohne Wissenstransfer dient; und

einen Schritt, der für die Kontroll-Software (18) darin besteht, das genannte flüchtige Zertifikat (13) mit Hilfe eines mit dem genannten privaten Signaturschlüssel (14) assoziierten öffentlichen Schlüssels zu öffnen und aus dem genannten flüchtigen Zertifikat (13) die genannten Sitzungsidentifikationsdaten (Id) und das flüchtige öffentliche Modul n zu extrahieren.

2. Verfahren nach Anspruch 1, **dadurch gekennzeichnet, dass** der Extraktionsschritt ferner Folgendes beinhaltet:

Extrahieren des genannten öffentlichen Exponenten v und/oder der genannten flüchtigen öffentlichen Zahlen G1, G2,...,Gm aus dem genannten flüchtigen Zertifikat (13).

3. Verfahren nach Anspruch 1 oder Anspruch 2, **dadurch gekennzeichnet, dass** das genannte erste Computergerät (1) ein Kryptogramm (20) des genannten privaten Signaturschlüssels (14) enthält, wobei das Verfahren ferner einen Schritt beinhaltet, der für die genannte Sitzungsöffnungssoftware (4) darin besteht, das genannte Kryptogramm (20) mit Hilfe der genannten Personenkennungen (21) zu entschlüsseln.

4. Verfahren nach Anspruch 1 oder Anspruch 2, **dadurch gekennzeichnet, dass** ein Kryptogramm (20) des genannten privaten Signaturschlüssels (14) in einer von dem genannten Benutzer (5) gehaltenen Speicherkarte (22) enthalten ist, wobei das Verfahren ferner Folgendes beinhaltet:

einen Schritt, der für den genannten Benutzer (5) darin besteht, die genannte Speicherkarte (22) in einen mit dem genannten ersten Computergerät (1) assoziierten Speicherkartenleser (23) einzulegen; und
einen Schritt, der für die genannte

Sitzungsöffnungssoftware (4) darin besteht, das genannte Kryptogramm (20) mit Hilfe der genannten Personenkennungen (21) zu entschlüsseln.

5. Verfahren nach Anspruch 1 oder Anspruch 2, **dadurch gekennzeichnet, dass** der genannte private Signaturschlüssel (14) sowie Signaturalgorithmen (25) in einer von dem genannten Benutzer (5) gehaltenen Speicherkarte (22) begrenzt sind, wobei das Verfahren ferner Folgendes beinhaltet:

einen Schritt, der für den genannten Benutzer (5) darin besteht, die genannte Speicherkarte (22) in einen mit dem genannten ersten Computergerät (1) assoziierten Speicherkartenleser (23) einzulegen; und
einen Schritt, der für die genannte

Sitzungsöffnungssoftware (4) darin besteht, das genannte flüchtige Zertifikat (13) durch Abarbeiten der genannten Signaturalgorithmen (25) mit Hilfe des genannten privaten Signaturschlüssels (14) zu produzieren.

6. Verfahren nach einem der Ansprüche 1 bis 5, **dadurch gekennzeichnet, dass** das genannte Authentifikationsprotokoll ohne Wissenstransfer vom Typ GQ0 ist, wobei das genannte Verfahren ferner, zum Produzieren des genannten flüchtigen öffentlichen Moduls n, des genannten öffentlichen Exponenten v sowie wenigstens eines Paares (Qi,Gi), wobei i=1,...,m ist, umfassend eine private Zahl Qi und die entsprechende öffentliche Zahl Gi, die folgenden Schritte beinhaltet:

- Fixieren des Wertes des genannten öffentlichen Exponenten v,
- zufälliges Auswählen des genannten flüchtigen öffentlichen Moduls n,
- zufälliges Auswählen der genannten wenigstens einen flüchtigen privaten Zahl Qi, und
- Einholen der genannten wenigstens einen öffentlichen Zahl Gi gemäß
der Gleichung $Gi \cdot Qi^v \equiv 1$ mod n oder
der Gleichung $Gi \equiv Qi^v$ mod n,
wobei das genannte flüchtige Zertifikat (13) das flüchtige öffentliche Modul n, den öffentlichen Exponenten v und die öffentliche Zahl Gi mit den genannten Sitzungsidentifikationsdaten (Id) verbindet.

7. Verfahren nach einem der Ansprüche 1 bis 5, **dadurch gekennzeichnet, dass** das genannte Authentifikationsprotokoll ohne Wissenstransfer vom Typ GQ1 ist, wobei das genannte Verfahren ferner, zum Produzieren des genannten flüchtigen öffentlichen Moduls n, des genannten öffentlichen Exponente v sowie des wenigstens einen Paares (Qi,Gi), wobei i=1,...,m ist, umfassend eine private Zahl Qi und die entsprechende öffentliche Zahl Gi, die folgenden Schritte beinhaltet:

- Fixieren des Wertes des genannten öffentlichen Exponenten v,
- Einholen des genannten flüchtigen öffentlichen Moduls n durch Multiplizieren der genannten f ersten privaten Faktoren p1,...,pf, wobei der genannte öffentliche Exponent v die erste mit allen Zahlen (pj-1) ist, wobei j=1,...,f ist,
- Einholen der genannten wenigstens einen öffentlichen Zahl Gi unter Anwendung eines RSA-Standardsignaturformats auf eine entsprechende Nachricht mi,
- Feststellen eines privaten Exponenten s wie (sv-1) oder ein Mehrfaches von allen Zahlen (pj-1) für j=1,...,f,

und

- Einholen der genannten wenigstens einen flüchtigen privaten Zahl Qi entsprechend der Gleichung $Qi \equiv Gi^s$ mod n, wobei das genannte flüchtige Zertifikat (13) das flüchtige öffentliche Modul n und den öffentlichen Exponenten v mit den genannten Sitzungsidentifikationsdaten (Id) verbindet.

8. Verfahren nach einem der Ansprüche 1 bis 5, **dadurch gekennzeichnet, dass** das genannte Authentifikationsprotokoll ohne Wissenstransfer vom Typ GQ2 ist, wobei das genannte Verfahren ferner, zum Produzieren des genannten flüchtigen öffentlichen Moduls n, des genannten öffentlichen Exponenten v sowie der genannten flüchtigen privaten Zahlen Q1,Q2,...,Qm und der flüchtigen öffentlichen Zahlen G1,G2,...,Gm, die folgenden Schritte beinhaltet:

- Fixieren eines Sicherheitsparameters k, wobei k eine ganze Zahl größer als 1 ist, und Einholen des Wertes des genannten öffentlichen Exponenten v entsprechend der Gleichung v=2^k,
- Einholen des genannten flüchtigen öffentlichen Moduls n durch Multiplizieren der genannten f ersten privaten Faktoren p1,...,pf,
- Auswählen der m Basiszahlen gi (für i=1,...,m), wobei jede Basiszahl gi eine ganze Zahl größer als 1 ist, und Einholen der flüchtigen öffentlichen Zahlen Gi entsprechend der Gleichung $Gi \equiv gi^2$ mod n,
- Feststellen eines privaten Exponenten s wie (sv-1) oder ein Mehrfaches von allen Zahlen (pj-1) für j=1,...,f, und
- Einholen der genannten flüchtigen privaten Zahlen Qi entsprechend der Gleichung $Qi \equiv Gi^s$ mod n,

wobei das genannte flüchtige Zertifikat (13) das flüchtige öffentliche Modul n mit den genannten Sitzungsidentifikationsdaten (Id) verbindet.

9. System, das ein erstes Computergerät (1) und wenigstens ein zweites Computergerät (2) umfasst, wobei die genannten Computergeräte mit einem Kommunikationsnetz (3) verbunden sind, wobei das genannte System die Authentifikation des genannten ersten Computergeräts (1) durch das genannte zweite Computergerät (2) im Laufe einer Kommunikationssitzung von bestimmter Dauer zwischen dem genannten ersten Computergerät und dem genannten zweiten Computergerät zulässt, wobei das erste Computergerät (1) Folgendes umfasst:

eine Sitzungsöffnungssoftware (4) zur Abarbeitung durch einen Benutzer (5) während des Öffnens einer Sitzung auf dem genannten ersten Computergerät (1) durch Betätigen einer Befehlseinrichtung (6) und Eingeben, mittels der genannten Befehlseinrichtung (6), von Personenkennungen (21), wobei die genannten Personenkennungen (21) das Kontrollieren der Identität des genannten Benutzers (5) und das Zugreifen auf einen privaten Signaturschlüssel (14) des genannten Benutzers (5) zulassen;
erste Rechenmittel (7), kontrolliert durch die genannte Sitzungsöffnungssoftware (4) und mit Mitteln zum Produzieren:

von Sitzungsidentifikationsdaten (Id),
eines Satzes von flüchtigen privaten Zahlen Q1,Q2,...,Qm und von jeweiligen flüchtigen öffentlichen Zahlen G1,G2,...,Gm,
wobei m eine ganze Zahl gleich oder größer als 1 ist,
wobei jedes Zahlenpaar (Qi,Gi) Folgendes verifiziert:

entweder Gleichung $Gi \cdot Qi^v \equiv 1$ mod n,
oder Gleichung $Gi = Qi^v$ mod n,
wobei i eine ganze Zahl zwischen 1 und m ist, und
v ein öffentlicher Exponent größer als zwei ist, und
wobei n ein flüchtiges öffentliches Modul gleich dem Produkt von f ersten privaten Faktoren mit der Bezeichnung p1,...,pf ist, wobei wenigstens zwei dieser ersten Faktoren unterschiedlich sind,
wobei f eine ganze Zahl größer als 1 ist,
wobei das genannte flüchtige öffentliche Modul n eine reduzierte Größe mit Bezug auf die Größe des privaten Signaturschlüssels (14) hat und so dass das genannte flüchtige öffentliche Modul n eine Faktorisierung hat, die für eine Nutzungsdauer des öffentlichen flüchtigen Moduls n im Vergleich zur Dauer der genannten Sitzung geheim bleiben muss, und

ein eindeutiges flüchtiges Zertifikat (13) durch Signieren, mittels des genannten privaten Signaturschlüssels (14), wenigstens der genannten Sitzungsidentifikationsdaten (Id) und des genannten flüchtigen öffentlichen Moduls n;

Sperrmittel (15) zum Sperren der Abarbeitung der Sitzungsöffnungssoftware (4) nach der Sitzungsöffnungsphase während der gesamten Dauer der Sitzung;
eine Nachweissoftware (16), die Befehle umfasst zum Kontrollieren der genannten ersten Rechenmittel (7) und zum Wirken, wenn seine Abarbeitung durch den Benutzer (5) wenigstens im Laufe der ersten Verbindung des ersten Computergeräts (1) mit dem zweiten Computergerät während der genannten Sitzung gestartet wird, durch Betätigen der genannten Befehlseinrichtung (6), als Zeuge in einem Authentifikationsprotokoll ohne Wissenstransfer; und
Mittel zum Senden des genannten flüchtigen Zertifikats (13) zu dem zweiten Computergerät (2) über das genannte Kommunikationsnetz (3), und

wobei das zweite Computergerät (2) Folgendes umfasst:

eine Kontroll-Software (18), die Befehle zum Kontrollieren der zweiten Rechenmittel (17), zum Öffnen des genannten flüchtigen Zertifikats (13) mit Hilfe eines mit dem genannten privaten Signaturschlüssel (14) assoziierten öffentlichen Schlüssels (19) und zum Extrahieren des genannten flüchtigen Zertifikats (13) der genannten Sitzungsidentifikationsdaten (Id) und des flüchtigen öffentlichen Moduls n umfasst, um als Kontrolleur in dem genannten Authentifikationsprotokoll ohne Wissenstransfer zu dienen; und
Startmittel zum Starten der Abarbeitung der genannten Kontroll-Software (18).

10. System nach Anspruch 9, **dadurch gekennzeichnet, dass** das genannte erste Computergerät (1) ein Kryptogramm (20) des genannten privaten Signaturschlüssels (14) enthält, und dadurch, dass die genannten ersten Rechenmittel (7) das genannte Kryptogramm (20) mit Hilfe der genannten Personenkennungen (21) entschlüsseln können.

11. System nach Anspruch 9, **dadurch gekennzeichnet, dass** es ferner einen mit dem ersten Computergerät (1) assoziierten Speicherkartenleser (23) umfasst, und in den der genannte Benutzer (5) eine ein Kryptogramm (20) des genannten privaten Signaturschlüssels (14) enthaltende Speicherkarte (22) einlegen kann, wobei der genannte Speicherkartenleser (23) Datenübertragungsmittel (24) zwischen der genannten Speicherkarte (22) und dem ersten Computergerät (1) umfasst, und dadurch, dass die genannten ersten Rechenmittel (7) das genannte Kryptogramm (20) mit Hilfe der genannten Personenkennungen (21) entschlüsseln können.

12. System nach Anspruch 9, **dadurch gekennzeichnet, dass** es ferner einen mit dem genannten ersten Computergerät (1) assoziierten Speicherkartenleser (23) umfasst, und in den der genannte Benutzer (5) eine den genannten privaten Signaturschlüssel (14) sowie Signaturalgorithmen (25) enthaltende Speicherkarte (22) einlegen kann, wobei der genannte Speicherkartenleser (23) Mittel (24) zum Übertragen von Daten zwischen der genannten Speicherkarte (22) und dem ersten Computergerät (1) umfasst, und dadurch, dass die genannten ersten Rechenmittel (7) das genannte flüchtige Zertifikat (13) durch Abarbeiten der genannten Signaturalgorithmen (25) mit Hilfe des genannten privaten Signaturschlüssels (14) produzieren kann.

## Claims

1. Method designed to permit the authentication of a first computer device by at least a second computer device during a communication session with a given duration between said first computer device and said second computer device, said computer devices being connected to a communication network, the method comprising:

a step consisting, for a user (5), of opening a session on said first computer device (1) by executing session opening software (4) and entering personal identifiers (21), said personal identifiers (21) permitting the verification of the identity of said user (5) and access to a private signature key (14) of said user (5),
a step consisting, for said session opening software (4), of producing:

session identification data (Id),
a series of private ephemeral numbers Q1,Q2,...,Qm and respective public ephemeral numbers G1,G2, ...,Gm,
where m is a whole number equal to 1 or more,
with each pair of numbers (Qi,Gi) verifying either the equation $Gi \cdot Qi^v \equiv 1$ mod n,
or the equation $Gi = Qi^v$ mod n,
where i is a whole number between 1 and m and

v is a public exponent larger than two, and where

n is a public ephemeral module equal to the product of first private factors f designated by p1, ...,pf, at least two of these first factors being distinct,

f being a whole number greater than 1,

said public ephemeral module n having a dimension which is reduced relative to the dimension of the private signature key (14), and such that said public ephemeral module n has factorisation which must remain secret for a duration of use of the public ephemeral module n comparable to the duration of said session, and

a unique ephemeral certificate (13), by signing, by means of said private signature key (14), at least said session identification data (Id) and said public ephemeral module n;

inhibition of execution of the session opening software (4) after the phase of opening of the session, throughout the entire duration of the session;

the method additionally comprising, at least during the first connection of the first computer device (1) to the second computer device (2) during said session:

     a step consisting, for said user (5), of launching the execution of test software (16) acting as a reference in an authentication protocol without transfer of knowledge; the transmission of said ephemeral certificate (13) to the second computer device (2); a step consisting, for the second computer device (2), of launching the execution of control software (18) which acts as a controller in said authentication protocol without transfer of knowledge; and a step consisting, for said control software (18), of opening said ephemeral certificate (13) by means of a public key associated with said private signature key (14) and of extracting from said ephemeral certificate (13) said session identification data (Id) and the public ephemeral module n.

2. Method according to claim 1, **characterised in that** the extraction step additionally comprises:

     extraction of said ephemeral certificate (13) from said public exponent v and/or from said public ephemeral numbers G1, G2,...,Gm.

3. Method according to claim 1 or claim 2, **characterised in that** said first computer device (1) contains a cryptogram (20) of said private signature key (14), the method additionally comprising a step consisting, for said session opening software (4), of deciphering said cryptogram (20) by implementing said personal identifiers (21).

4. Method according to claim 1 or claim 2, **characterised in that** a cryptogram (20) of said private signature key (14) is contained in a memory card (22) held by said user (5), the method additionally comprising:

     a step consisting, for said user (5), of inserting said memory card (22) in a memory card reader (23) associated with said first computer device (1); and a step consisting, for said session opening software (4), of deciphering said cryptogram (20) by implementing said personal identifiers (21).

5. Method according to claim 1 or claim 2, **characterised in that** said private signature key (14), as well as signature algorithms (25), are confined in a memory card (22) held by said user (5), the method additionally comprising:

     a step consisting, for said user (5), of inserting said memory card (22) in a memory card reader (23) associated with said first computer device (1); and a step consisting, for said session opening software (4), of producing said ephemeral certificate (13) by executing said signature algorithms (25) by means of said private signature key (14).

6. Method according to any one of claims 1 to 5, **characterised in that** said authentication protocol without transfer of knowledge is of the type GQ0, said method additionally comprising, in order to produce said public ephemeral module n, said public exponent v, as well as at least one pair (Qi,Gi), where i=1,...,m, comprising a private number Qi and the corresponding public number Gi, the following steps:

     - determining the value of said public exponent v,
     - random selection of said public ephemeral module n,
     - random selection of said at least one private ephemeral number Qi, and
     - obtaining said at least one public number Gi according to
     the equation $Gi \cdot Qi^v \equiv 1 \bmod n$ or
     the equation $Gi \equiv Qi^v \bmod n$,

said ephemeral certificate (13) associating the public ephemeral module n, the public exponent v and the public number Gi with said session identification data (Id).

7. Method according to any one of claims 1 to 5, **char-**

**acterised in that** said authentication protocol without transfer of knowledge is of the type GQ1, said method additionally comprising, in order to produce said public ephemeral module n, said public exponent v as well as at least one pair (Qi,Gi), where i=1,...,m, comprising a private number Qi and the corresponding public number Gi, the following steps:

- determining the value of said public exponent v,
- obtaining said public ephemeral module n by multiplying said first private p1,...,pf factors f, said public exponent v being first with all the numbers (pj-1), where j=1,...,f,
- obtaining said at least one public number Gi by applying an RSA standard signature format to a corresponding message mi,
- determining a private exponent s such that (sv-1) is a multiple of all the numbers (pj-1) for j=1,...,f, and
- obtaining said at least one ephemeral private number Qi according to the equation $Qi \equiv Gi^s$ mod n,

said ephemeral certificate (13) associating the public ephemeral module n and the public exponent v with said session identification data (Id).

8. Method according to any one of claims 1 to 5, **characterised in that** said authentication protocol without transfer of knowledge is of the type GQ2, said method additionally comprising, in order to produce said public ephemeral module n, said public exponent v as well as said private ephemeral numbers Q1,Q2,...,Qm and public ephemeral numbers G1,G2,...,Gm, the following steps:

- determining a security parameter k, where k is a whole number greater than 1, and obtaining the value of said public exponent v according to the equation $v=2^k$,
- obtaining said public ephemeral module n by multiplying said first private p1,...,pf factors f,
- selecting m basic numbers gi (for i=1,...,m), where each basic number gi is a whole number greater than 1, and obtaining public ephemeral numbers Gi according to the equation $Gi \equiv gi^2$ mod n,
- determining a private exponent s such that (sv-1) is a multiple of all the numbers (pj-1) for j=1,...,f, and
- obtaining said private ephemeral numbers Qi according to the equation $Qi \equiv Gi^s$ mod n,

said ephemeral certificate (13) associating the public ephemeral module n with said session identification data (Id).

9. System comprising a first computer device (1) and at least a second computer device (2), said computer devices being connected to a communication network (3), said system permitting authentication of said first computer device (1) by said second computer device (2) during a communication session with a given duration between said first computer device and said second computer device, the first computer device (1) comprising:

session opening software (4) which is designed to be executed by a user (5) during the opening of a session on said first computer device (1), by activating a control unit (6) and by entering personal identifiers (21) by means of said control unit (6), said personal identifiers (21) making it possible to check the identity of said user (5) and to access a private signature key (14) of said user (5) ;
first calculation means (7) which are controlled by said session opening software (4), and having means to produce:

session identification data (Id),
a series of private ephemeral numbers Q1,Q2,...,Qm and respective public ephemeral numbers G1,G2, ...,Gm,
where m is a whole number equal to 1 or more,
each pair of numbers (Qi,Gi) verifying either the equation $Gi \cdot Qi^v \equiv 1$ mod n,
or the equation $Gi = Qi^v$ mod n,
where i is a whole number between 1 and m and
v is a public exponent greater than two, and where
n is a public ephemeral module equal to the product of first private factors f designated by p1,...,pf, at least two of these first factors being distinct,
f being a whole number greater than 1,
said public ephemeral module n having a dimension which is reduced relative to the dimension of the private signature key (14), and such that said public ephemeral module n has factorisation which must remain secret for a duration of use of the public ephemeral module n comparable to the duration of said session, and
a unique ephemeral certificate (13), by signing, by means of said private signature key (14), at least said session identification data (Id) and said public ephemeral module n;

means for inhibition (15) which can inhibit the execution of the session opening software (4) after the session opening phase, throughout the entire duration of the session;
test software (16) comprising instructions for controlling said first calculation means (7), and for acting, when its execution is launched by the user (5), at least during the first connection of the first computer device (1) to the second computer device during said session, by activating said control device (6), as a reference in an authentication protocol without transfer of knowledge; and

means for transmitting said ephemeral certificate (13) to the second computer device (2) via said communication network (3), and

the second computer device (2) comprising:

control software (18) comprising instructions for controlling second calculation means (17), in order to open said ephemeral certificate (13) by means of a public key (19) associated with said private signature key (14), and in order to extract from said ephemeral certificate (13) said session identification data (Id) and the public ephemeral module n, such as to act as a controller in said authentication protocol without transfer of knowledge; and

launching means in order to launch the execution of said control software (18).

10. System according to claim 9, **characterised in that** said first computer device (1) contains a cryptogram (20) of said private signature key (14), and **in that** said first calculation means (7) can decipher said cryptogram (20) by implementing said personal identifiers (21).

11. System according to claim 9, **characterised in that** it additionally comprises a memory card reader (23) associated with said first computer device (1), and wherein said user (5) can insert a memory card (22) containing a cryptogram (20) of said private signature key (14), said memory card reader (23) comprising means for transfer of data (24) between said memory card (22) and the first computer device (1), and **in that** said first calculation means (7) can decipher said cryptogram (20) by implementing said personal identifiers (21).

12. System according to claim 9, **characterised in that** it additionally comprises a memory card reader (23) associated with said first computer device (1), and wherein said user (5) can insert a memory card (22) containing said private signature key (14) as well as signature algorithms (25), said memory card reader (23) comprising means for transfer of data (24) between said memory card (22) and the first computer device (1), and **in that** said first calculation means (7) can produce said ephemeral certificate (13) by executing said signature algorithms (25) by means of said private signature key (14).

Fig. 1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2788912
- EP 0311470 A
- FR 2788911
- EP 0311470 B1
- WO 0046946 A
- WO 0045550 A
- WO 0046947 A

**Littérature non-brevet citée dans la description**

- An Implementation of a zero-knowledge protocol for a secure network login procédure. **JARAMILLO et al.** Energy and Information Technologies in the South East, Proceedings of the South East Conference. IEEE, 09 Avril 1989, vol. 1, 197-201